# EUROPEAN PATENT APPLICATION

(11) **EP 4 613 827 A1**
(43) Date of publication of application: **10.09.2025**
(21) Application number: 25720616.9
(22) Date of filing: 23.01.2025
(51) Int. Cl.: C09K 3/00, C09D 171/02, C09D 183/02

(54) **SURFACE TREATMENT AGENT**

(30) Priority: 23.01.2024 CN 202410092537
(71) Applicant: DAIKIN INDUSTRIES, LTD., Osaka 530-0001 (JP)
(72) Inventor: XU, Runxiang, Changshu, Jiangsu 215522 (CN); FUKUDA, Noriaki, Changshu, Jiangsu 215522 (CN); SAKAMOTO, Eiji, Osaka-shi, Osaka 530-0001 (JP)
(74) Representative: Hoffmann Eitle
(86) International application number: PCT/JP2025/002067
(87) International publication number: WO 2025/159159

(57) **Abstract**

An object of the present disclosure is to provide a surface-treating agent capable of achieving a surface-treating layer having good heat resistance.

A surface-treating agent comprising:
a fluoropolyether group-containing silane compound (A);
a low molecular weight fluorine-containing compound or low molecular weight silane compound (B); and
a fluorinated solvent (C),
wherein
the low molecular weight fluorine-containing compound or low molecular weight silane compound (B) comprises one or two or more selected from a low molecular weight fluorine-containing compound having an ether bond or an aromatic group and a low molecular weight silane coupling agent; and
the fluorinated solvent (C) comprises a compound represented by the following formula:

CR¹R²=CR³R⁴ (C1)

wherein
R¹ represents a C₁₋₆ perfluoroalkyl group or a fluorine atom,
R² represents a C₁₋₆ perfluoroalkyl group,
R³ represents a C₁₋₆ perfluoroalkyl group, and
R⁴ represents a C₁₋₆ perfluoroalkyl group.

## Description

### Technical Field

The present disclosure relates to a surface-treating agent.

### Background Art

Certain types of fluorine-containing compounds are known to be capable of providing excellent water-repellency, oil-repellency, antifouling properties, and the like when used in surface treatment of a substrate. Layers obtained from surface-treating compositions containing fluorine-containing compounds are applied as so-called functional thin films to a large variety of substrates such as glass, plastics, fibers, and building materials. Patent Literature 1 describes a surface-treating agent containing a perfluoro(poly)ether group-containing silane compound.

### Citation List

### Patent Literature

Patent Literature 1: International Publication No. WO 2014/069592
Patent Literature 2: International Publication No. WO 2020/066533

### Summary of Invention

### Technical Problem

An object of the present disclosure is to provide a surface-treating agent capable of achieving a surface-treating layer having good heat resistance.

### Solution to Problem

The present disclosure includes the following embodiments:
[1] A surface-treating agent comprising:
   a fluoropolyether group-containing silane compound (A) ;
   a low molecular weight fluorine-containing compound or low molecular weight silane compound (B); and
   a fluorinated solvent (C),
   wherein
   the low molecular weight fluorine-containing compound or low molecular weight silane compound (B) comprises one or two or more selected from a low molecular weight fluorine-containing compound having an ether bond or an aromatic group and a low molecular weight silane coupling agent; and
   the fluorinated solvent (C) comprises a compound represented by the following formula:

      CR¹R²=CR³R⁴ (C1)

      wherein
      R¹ represents a C₁₋₆ perfluoroalkyl group or a fluorine atom,
      R² represents a C₁₋₆ perfluoroalkyl group,
      R³ represents a C₁₋₆ perfluoroalkyl group, and
      R⁴ represents a C₁₋₆ perfluoroalkyl group.
[2] The surface-treating agent according to [1], wherein the fluoropolyether group-containing silane compound (A) comprises at least a compound represented by the following formula (1) or (2):

   R^{F1}_{α}-X^{A}-R^{Si}_{β} (1)

   R^{Si} _{γ}-X^{A}-R^{F2}-X^{A}- R^{Si}_{γ} (2)

   wherein
   R^{F1} is independently Rf¹-R^{F}-O_{q}- or a fluoroalkyl group;
   R^{F2} is -Rf²ₚ-R^{F}-O_{q}- or a fluoroalkylene group;
   Rf¹ is independently a C₁₋₁₆ alkyl group optionally substituted with one or more fluorine atoms;
   Rf² is a C₁₋₆ alkylene group optionally substituted with one or more fluorine atoms;
   R^{F} is independently a divalent fluoropolyether group;
   p is 0 or 1;
   q is independently 0 or 1;
   R^{Si} is independently a monovalent group containing a Si atom to which a hydroxyl group, a hydrolyzable group, a hydrogen atom, or a monovalent organic group is bonded;
   at least one R^{Si} is a monovalent group containing a Si atom to which a hydroxyl group or a hydrolyzable group is bonded;
   X^{A} is independently a single bond or a di- to decavalent organic group;
   α is an integer of 1 to 9;
   β is an integer of 1 to 9; and
   γ is independently an integer of 1 to 9.
[3] The surface-treating agent according to [1] or [2], wherein a content of the fluoropolyether group-containing silane compound (A) is 0.01% by mass or more and 5% by mass or less based on a total amount of the surface-treating agent.
[4] The surface-treating agent according to any one of [1] to [3], wherein the low molecular weight fluorine-containing compound or low molecular weight silane compound (B) comprises one or two or more selected from the group consisting of a low molecular weight fluorine-containing compound having an ether bond (B-1), a low molecular weight fluorine-containing compound having an aromatic group (B-2), and a low molecular weight silane coupling agent (B-3).
[5] The surface-treating agent according to [4], wherein a content of the low molecular weight fluorine-containing compound (B-1) is 2 parts by mass or more and 1,000 parts by mass or less based on 1 part by mass of the fluoropolyether group-containing silane compound (A).
[6] The surface-treating agent according to [4] or [5], wherein a content of the low molecular weight fluorine-containing compound (B-2) is 1 part by mass or more and 50 parts by mass or less based on 100 parts by mass of the fluoropolyether group-containing silane compound (A).
[7] The surface-treating agent according to any one of [4] to [6], wherein a content of the low molecular weight silane coupling agent (B-3) is 1 part by mass or more and 50 parts by mass or less based on 100 parts by mass of the fluoropolyether group-containing silane compound (A).
[8] The surface-treating agent according to any one of [1] to [7], wherein the fluorinated solvent (C) has a boiling point of 100°C or higher.
[9] A laminate comprising a glass substrate and a surface-treating layer, wherein
   the surface-treating layer is formed from the surface-treating agent according to any one of [1] to [8].
[10] The laminate according to [9], wherein the surface-treating layer has a thickness of 5 nm or more and 50 nm or less.
[11] The laminate according to [9] or [10], wherein a content of alkaline earth metal in the glass substrate is 0.7 atm% or more.
[12] A kitchen utensil comprising the laminate according to any one of [9] to [11].

### Advantageous Effect of Invention

The surface-treating agent of the present disclosure is capable of achieving a surface-treating layer having good heat resistance.

### Description of Embodiments

The surface-treating agent of the present disclosure comprises:
a fluoropolyether group-containing silane compound (A);
a low molecular weight fluorine-containing compound or low molecular weight silane compound (B); and
a fluorinated solvent (C),
wherein
the low molecular weight fluorine-containing compound or low molecular weight silane compound (B) comprises one or two or more selected from a low molecular weight fluorine-containing compound having an ether bond or an aromatic group and a low molecular weight silane coupling agent; and
the fluorinated solvent (C) comprises a compound represented by the following formula:

   CR¹R²=CR³R⁴ (C1)

   wherein
   R¹ represents a C₁₋₆ perfluoroalkyl group or a fluorine atom,
   R² represents a C₁₋₆ perfluoroalkyl group,
   R³ represents a C₁₋₆ perfluoroalkyl group, and
   R⁴ represents a C₁₋₆ perfluoroalkyl group.

The surface-treating agent of the present disclosure is capable of achieving a surface-treating layer having good heat resistance and, preferably, is capable of forming a surface-treating layer having good heat resistance even after long-term storage.

### (Fluoropolyether group-containing silane compound (A))

Preferably, the fluoropolyether group-containing silane compound (A) comprises a compound containing at least a fluoropolyether group and silane, preferably a compound containing at least a fluoropolyether group and a hydrolyzable silyl group, and more preferably at least a compound represented by the following formula (1) or (2):

R^{F1}_{α}-X^{A}-R^{Si}_{β} (1)

R^{Si}_{γ}-X^{A}-R^{F2}-X^{A}-R^{Si}_{γ} (2)

wherein
R^{F1} is independently Rf¹-R^{F}-O_{q}-;
R^{F2} is - Rf²ₚ- R^{F}-O_{q}-;
Rf¹ is independently a C₁₋₁₆ alkyl group optionally substituted with one or more fluorine atoms;
Rf² is a C₁₋₆ alkylene group optionally substituted with one or more fluorine atoms;
R^{F} is independently a divalent fluoropolyether group;
p is 0 or 1;
q is independently 0 or 1;
R^{Si} is independently a monovalent group containing a Si atom to which a hydroxyl group, a hydrolyzable group, a hydrogen atom, or a monovalent organic group is bonded;
at least one R^{Si} is a monovalent group containing a Si atom to which a hydroxyl group or a hydrolyzable group is bonded;
X^{A} is independently a single bond or a di- to decavalent organic group;
α is an integer of 1 to 9;
β is an integer of 1 to 9; and
γ is independently an integer of 1 to 9.

The "hydrolyzable group" as used herein refers to a group capable of undergoing a hydrolysis reaction, for example, a group that can be removed from the main backbone of a compound by a hydrolysis reaction. The examples of the hydrolyzable group include -OR^{j}, -OCOR^{j}, -O-N=CR^{j}₂, -NR^{j}₂, -NHR^{j}, -NCO, and a halogen (in these formulae, R^{j} represents a substituted or unsubstituted C₁₋₄ alkyl group), and -OR^{j} (for example, an alkoxy group) is preferable. The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group or in particular an unsubstituted alkyl group is preferable, and methyl group or ethyl group is more preferable. The hydroxyl group in the hydrolyzable silyl group is not limited, and may be generated by hydrolysis of a hydrolyzable group.

The "organic group" as used herein refers to a monovalent group containing carbon. The organic group may be a hydrocarbon group or a derivative thereof, unless otherwise specified. The derivative of a hydrocarbon group refers to a group that has one or more of N, O, S, Si, amide, sulfonyl, siloxane, carbonyl, carbonyloxy, and the like at the end or in the molecular chain of the hydrocarbon group. The term simply referred to as an "organic group" means a monovalent organic group. The term "divalent organic group" refers to a divalent group containing carbon. The divalent organic group is not limited, and their examples include divalent groups obtained by further removing one hydrogen atom from the organic group.

The "hydrocarbon group" as used herein refers to a group that comprises carbon and hydrogen and that is obtained by removing one hydrogen atom from a hydrocarbon. The hydrocarbon group is not limited, and their examples include C₁₋₂₀ hydrocarbon groups such as an aliphatic hydrocarbon group and an aromatic hydrocarbon group. The "aliphatic hydrocarbon group" may be linear, branched, or cyclic, and may be saturated or unsaturated. The hydrocarbon group may comprise one or more ring structures. The hydrocarbon group may have one or more substituents.

The substituent of the "hydrocarbon group" as used herein is not limited, and their examples include one or more groups selected from a halogen atom as well as a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The examples of the "alkyl group" as used herein, unless otherwise specified, include C₁₋₁₂ (preferably C₁₋₆, more preferably C₁₋₃, and even more preferably C₁) alkyl groups (such as methyl group, ethyl group, propyl group, and isopropyl group). The "alkyl group" may be linear or branched, and is preferably linear. Moreover, the "alkyl group" may comprise a functional group.

In the formula (1), R^{F1} is independently Rf¹-R^{F}-O_{q}- or a fluoroalkyl group. In one embodiment, R^{F1} is preferably Rf¹-R^{F}-O_{q}-, and in another embodiment, R^{F1} is preferably a fluoroalkyl group. When R^{F1} is Rf¹-R^{F}-O_{q}-, the compound represented by the formula (1) comprises a fluoropolyether group and thus corresponds to the fluoropolyether group-containing silane compound.

In the formula (2), R^{F2} is -Rf²ₚ-R^{F}-O_{q}- or a fluoroalkylene group. In one embodiment, R^{F2} is preferably -Rf²ₚ-R^{F}-O_{q}-, and in another embodiment, R^{F2} is preferably a fluoroalkylene group. When R^{F2} is Rf²ₚ-R^{F}-O_{q}-, the compound represented by the formula (2) comprises a fluoropolyether group and thus corresponds to the fluoropolyether group-containing silane compound.

In the formula, Rf¹ is independently a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and even more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

In the formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

Rf² is preferably a C₁₋₆ alkylene group substituted with one or more fluorine atoms, more preferably a C₁₋₆ perfluoroalkylene group, and even more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

In the formula, p is 0 or 1. In one embodiment, p is 0. In another embodiment, p is 1.

In the formula, q is independently 0 or 1. In one embodiment, q is 0. In another embodiment, q is 1.

In the formulae (1) and (2), R^{F} is independently a divalent fluoropolyether group.

R^{F} may preferably comprise a group represented by the following formula:

-(OCₕ₁R^{Fa}₂ₕ₁)ₕ₃-(OCₕ₂R^{Fa}₂ₕ₂₋₂)ₕ₄-

wherein
R^{Fa} is independently a hydrogen atom, a fluorine atom, or a chlorine atom;
h1 is an integer of 1 to 6;
h2 is an integer of 4 to 8;
h3 is an integer of 0 or more; and
h4 is an integer of 0 or more,
provided that the sum of h3 and h4 is 1 or more, preferably 2 or more, and more preferably 5 or more, and the occurrence order of the respective repeating units enclosed in parentheses provided with h3 and h4 in not limited in the formulae.

In one embodiment, R^{F} may be linear or branched. R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is independently a hydrogen atom, a fluorine atom, or a chlorine atom;
a, b, c, d, e, and f are independently an integer of 0 to 200, and the sum of a, b, c, d, e, and f is 1 or more; and the occurrence order of the respective repeating units enclosed in parentheses provided with a, b, c, d, e, or f is not limited in the formula. However, when all R^{Fa} groups are hydrogen atoms or chlorine atoms, at least one of a, b, c, e, and f is 1 or more.

R^{Fa} is preferably a hydrogen atom or a fluorine atom, and more preferably a fluorine atom. However, when all R^{Fa} groups are hydrogen atoms or chlorine atoms, at least one of a, b, c, e, and f is 1 or more.

Preferably, a, b, c, d, e, and f may be independently an integer of 0 to 100.

The sum of a, b, c, d, e, and f is preferably 5 or more, and more preferably 10 or more, and may be, for example, 15 or more or 20 or more. The sum of a, b, c, d, e, and f is preferably 200 or less, more preferably 100 or less, and even more preferably 60 or less, and may be, for example, 50 or less or 30 or less.

These repeating units may be linear or branched, and may comprise a ring structure. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like. -(OC₅F₁₀)- may be - (OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like. -(OC₄F₈)- may be any of -(OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)2CF₂)-, -(OCF₂C(CF₃)₂)-, -(OCF(CF₃)CF(CF₃))-, - (OCF(C₂F₅)CF₂)-, and -(OCF₂CF(C₂F₅))-. -(OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and -(OCF(CF₃))-.

In one embodiment, the repeating units are linear. When the repeating units are linear, the surface lubricity, abrasion durability, and the like of the surface-treating layer can be improved.

In one embodiment, the repeating units are branched. When the repeating units are branched, the dynamic friction coefficient of the surface-treating layer can be increased.

In one embodiment, R^{F} may comprise a ring structure.

The ring structure may be any of the following 3-membered ring, 4-membered rings, 5-membered rings, and 6-membered rings: 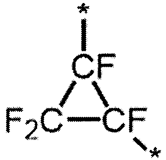 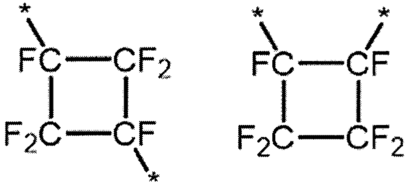 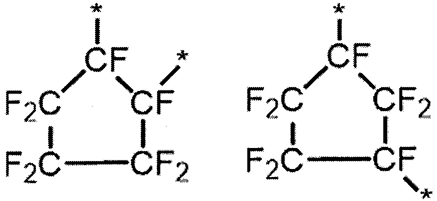 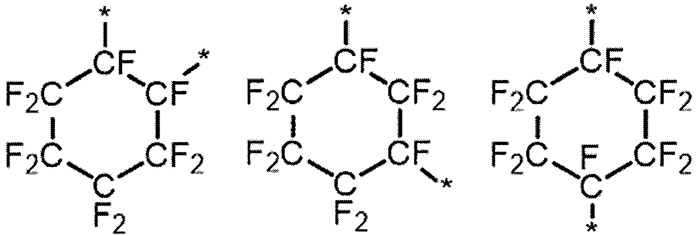 wherein * represents a binding position.

The ring structure may preferably be a 4-membered ring, a 5-membered ring, or a 6-membered ring, and more preferably a 4-membered ring or a 6-membered ring.

The repeating units having a ring structure may preferably be any of the following units: 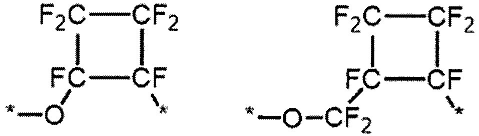 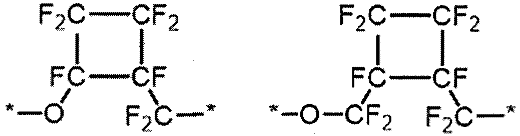 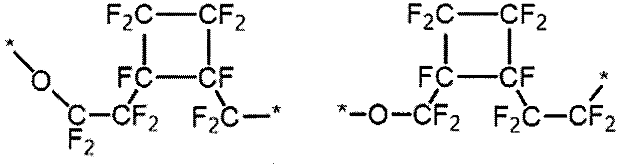 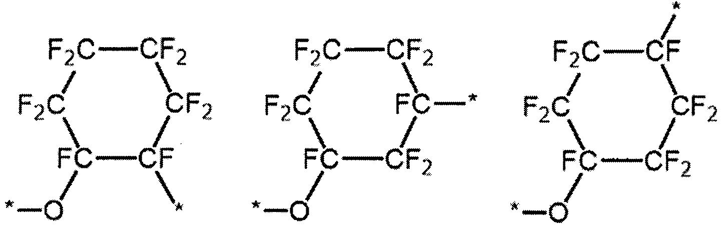 wherein * represents a binding position.

In one embodiment, the repeating units are linear. When the repeating units are linear, the surface lubricity, abrasion durability, and the like of the surface-treating layer can be improved.

In one embodiment, the repeating units are branched. When the repeating units are branched, the dynamic friction coefficient of the surface-treating layer can be increased.

In one embodiment, R^{F} is independently a group represented by any of the following formulae (f1) to (f6):

-(OC₃F₆)_{d}-(OC₂F₄)ₑ- (f1)

wherein d is an integer of 1 to 200, and e is 0 or 1;

-(OC₄F₈)_{c}-(OC₃F₆)_{d}-(OC₂F₄)ₑ-(OCF₂)_{f}- (f2)

wherein c and d are independently an integer of 0 or more and 30 or less, and e and f are independently an integer of 1 or more and 200 or less,
the sum of c, d, e, and f is 2 or more, and
the occurrence order of the respective repeating units enclosed in parentheses provided with the subscript c, d, e, or f is not limited in the formula;

   -(R⁶-R⁷)_{g}- (f3)

   wherein R⁶ is OCF₂ or OC₂F₄,
R⁷ is a group selected from OC₂F₄, OC₃F₆, OC₄F₈, OC₅F₁₉, and OC₆F₁₂, or is a combination of two or three groups independently selected from these groups, and
g is an integer of 2 to 100;

   -(R⁶-R⁷)_{g}-R^{r}-(R^{7'}-R^{6'})_{g'}- (f4)

   wherein R⁶ is OCF₂ or OC₂F₄,
R⁷ is a group selected from OC₂F₄, OC₃F₆, OC₄F₈, OC₅F₁₀, and OC₆F₁₂, or is a combination of two or three groups independently selected from these groups,
R^{6'} is OCF₂ or OC₂F₄,
R^{7'} is a group selected from OC₂F₄, OC₃F₆, OC₄F₈, OC₅F₁₀, and OC₆F₁₂, or is a combination of two or three groups independently selected from these groups,
g is an integer of 2 to 100,
g' is an integer of 2 to 100, and
R^{r} is any of: 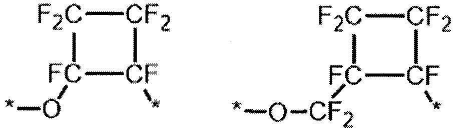 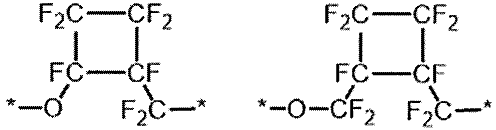 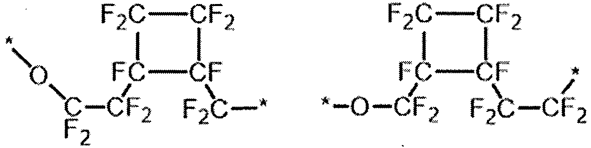 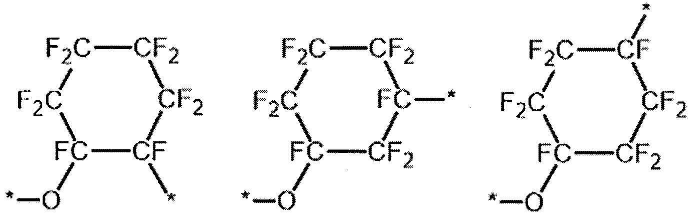 wherein * represents a binding position;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

   wherein e is an integer of 1 or more and 200 or less; a, b, c, d, and f are independently an integer of 0 or more and 200 or less; and the occurrence order of the respective repeating units enclosed in parentheses provided with a, b, c, d, e, or f is not limited in the formula, and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

   wherein f is an integer of 1 or more and 200 or less; a, b, c, d, and e are independently an integer of 0 or more and 200 or less; and the occurrence order of the respective repeating units enclosed in parentheses provided with a, b, c, d, e, or f is not limited in the formula.

In the formula (f1), d is preferably 5 to 200, more preferably 10 to 100, and even more preferably 15 to 50, and is, for example, an integer of 25 to 35. OC₃F₆ in the formula (f1) is preferably (OCF₂CF₂CF₂), (OCF(CF₃)CF₂), or (OCF₂CF(CF₃)), and more preferably (OCF₂CF₂CF₂). OC₂F₄ in the formula (f1) is preferably (OCF₂CF₂) or (OCF(CF₃)), and more preferably (OCF₂CF₂). In one embodiment, e is 0. In another embodiment, e is 1.

In the formula (f2), e and f are independently an integer of preferably 5 to 200, and more preferably 10 to 200. The sum of c, d, e, and f is preferably 5 or more and more preferably 10 or more, and may be, for example, 15 or more or 20 or more. In one embodiment, the formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by -(OC₂F₄)ₑ-(OCF₂)_{f}-.

In the formula (f3), R⁶ is preferably OC₂F₄. In (f3), R⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and their examples include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, -OC₂F₄OC₂F₄OC₄F₈-, -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. In the formula (f3), g is an integer of preferably 3 or more, and more preferably 5 or more. g is preferably an integer of 50 or less. In the formula (f3), OC₂F₄, OC₃F₆, OC₄F₈, OC₅F₁₀, and OC₆F₁₂ may be linear or branched, and are preferably linear. In this embodiment, the formula (f3) is preferably -(OC₂F₄-OC₃F₆)_{g}- or -(OC₂F₄-OC₄F₈)_{g}-.

In the formula (f4), R⁶, R⁷, and g have the same meanings as those described for the formula (f3), and have the same embodiments. R^{6'}, R^{7'}, and g' have the same meanings as R⁶, R⁷, and g described for the formula (f3), respectively, and have the same embodiments. R^{r} is preferably any of: 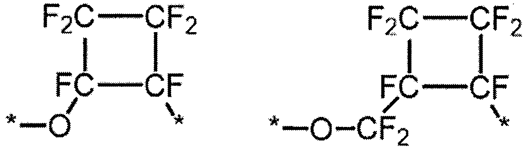 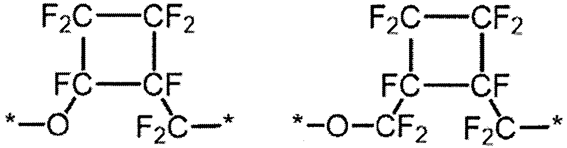 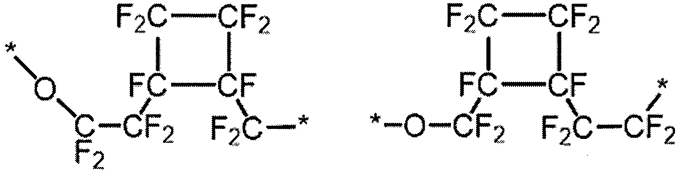
wherein * represents a binding position, and
more preferably 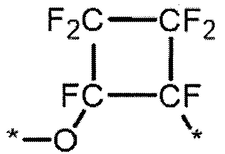
wherein * represents a binding position.

In the formula (f5), e is preferably an integer of 1 or more and 100 or less, and more preferably 5 or more and 100 or less. The sum of a, b, c, d, e, and f is preferably 5 or more, and more preferably 10 or more, and is, for example, 10 or more and 100 or less.

In the formula (f6), f is preferably an integer of 1 or more and 100 or less, and more preferably 5 or more and 100 or less. The sum of a, b, c, d, e, and f is preferably 5 or more, and more preferably 10 or more, and is, for example, 10 or more and 100 or less.

In one embodiment, R^{F} is a group represented by the formula (f1).

In one embodiment, R^{F} is a group represented by the formula (f2).

In one embodiment, R^{F} is a group represented by the formula (f3).

In one embodiment, R^{F} is a group represented by the formula (f4).

In one embodiment, R^{F} is a group represented by the formula (f5).

In one embodiment, R^{F} is a group represented by the formula (f6).

In one embodiment, the fluoropolyether group-containing silane compound contained in the surface-treating layer, from the viewpoint of the lubricity of the surface-treating layer, preferably comprises a structure represented by the formula (f1), (f2), (f3), (f5), or (f6), more preferably comprises a structure represented by the formula (f1) or (f2), and even more preferably comprises a structure represented by the formula (f1).

In another embodiment, the fluoropolyether group-containing silane compound that may be contained in the surface-treating layer preferably comprises a structure represented by the formula (f1), (f2), (f3), (f4), (f5), or (f6), more preferably comprises a structure represented by the formula (f1) or (f2), and even more preferably comprises a structure represented by the formula (f2).

In R^{F}, the ratio of e to f (hereinafter, referred to as an "e/f ratio") is 0.1 to 10, preferably 0.2 to 5, more preferably 0.2 to 2, even more preferably 0.2 to 1.5, and yet more preferably 0.2 to 0.85. With an e/f ratio of 10 or less, the lubricity, abrasion durability, and chemical resistance of the surface-treating layer obtained from the compound are further increased. The lower the e/f ratio is, the more improved the lubricity and the abrasion durability of the surface-treating layer are. On the other hand, with an e/f ratio of 0.1 or more, the stability of the compound can be more increased. The higher the e/f ratio is, the more improved the stability of the compound is.

The fluoroalkyl group represented by R^{F1} is a group obtained by replacing a hydrogen atom contained in an alkyl group with a fluorine atom, and may be linear or branched. The fluoroalkyl group represented by R^{F1} is preferably a C₁₋₅₀ fluoroalkyl group, more preferably a C₁₋₂₀ fluoroalkyl group, and even more preferably a C₁₋₁₆ fluoroalkyl group, and may be, for example, a C₁₋₁₀ fluoroalkyl group, moreover a C₁₋₆ fluoroalkyl group, and in particular a C₁₋₃ fluoroalkyl group. In one embodiment, the fluoroalkyl group represented by R^{F1} is a perfluoroalkyl group in which all hydrogen atoms are substituted with fluorine atoms. In such an embodiment, the perfluoroalkyl group is preferably a linear or branched C₁₋₅₀ perfluoroalkyl group, more preferably a linear or branched C₁₋₂₀ perfluoroalkyl group, and even more preferably a linear or branched C₁₋₁₆ perfluoroalkyl group, and may be, for example, a linear or branched C₁₋₁₀ perfluoroalkyl group, moreover a linear or branched C₁₋₆ perfluoroalkyl group, and in particular a linear or branched C₁₋₃ perfluoroalkyl group.

The fluoroalkylene group represented by R^{F2} is a group obtained by replacing a hydrogen atom contained in an alkylene group with a fluorine atom, and may be linear or branched. The fluoroalkylene group represented by R^{F2} is preferably a C₁₋₅₀ fluoroalkylene group, more preferably a C₁₋₂₀ fluoroalkylene group, and even more preferably a C₁₋₁₆ fluoroalkylene group, and may be, for example, a C₁₋₁₀ fluoroalkylene group, moreover a C₁₋₆ fluoroalkylene group, and in particular a C₁₋₃ fluoroalkylene group. In one embodiment, the fluoroalkylene group represented by R^{F2} is a perfluoroalkylene group in which all hydrogen atoms are substituted with fluorine atoms. In such an embodiment, the perfluoroalkyl group is preferably a linear or branched C₁₋₅₀ perfluoroalkylene group, more preferably a linear or branched C₁₋₂₀ perfluoroalkylene group, and even more preferably a linear or branched C₁₋₁₆ perfluoroalkylene group, and may be, for example, a linear or branched C₁₋₁₀ perfluoroalkylene group, moreover a linear or branched C₁₋₆ perfluoroalkylene group, and in particular a linear or branched C₁₋₃ perfluoroalkylene group.

In the fluoropolyether group-containing silane compound, the number average molecular weight of the R^{F1} and R^{F2} moieties is not limited, and is, for example, 500 to 30,000, preferably 1,500 to 30,000, and more preferably 2,000 to 10,000. Herein, the number average molecular weight of R^{F1} and R^{F2} is a value obtained by ¹⁹F-NMR measurement.

In another embodiment, the number average molecular weight of the R^{F1} and R^{F2} moieties is 500 to 30,000, preferably 1,000 to 20,000, more preferably 2,000 to 15,000, and even more preferably 2,000 to 10,000, and may be, for example, 3,000 to 6,000.

In another embodiment, the number average molecular weight of the R^{F1} and R^{F2} moieties may be 4,000 to 30,000, preferably 5,000 to 10,000, and more preferably 6,000 to 10,000.

In the formulae (1) and (2), R^{Si} is independently a monovalent group containing a Si atom to which a hydroxyl group, a hydrolyzable group, a hydrogen atom, or a monovalent organic group is bonded, and at least one R^{Si} is a monovalent group containing a Si atom to which a hydroxyl group or a hydrolyzable group is bonded.

Here, the term "hydrolyzable group" refers to a group that can undergo a hydrolysis reaction, for example, a group that can be removed from the main backbone of a compound by a hydrolysis reaction. The examples of the hydrolyzable group include -OR^{j}, -OCOR^{j}, -O-N=CR₂, -NR^{j}₂, -NHR^{j}, -NCO, and halogen (in these formulae, R^{j} represents a substituted or unsubstituted C₁₋₄ alkyl group).

In a preferable embodiment, R^{Si} is a monovalent group containing a Si atom to which a hydroxyl group or a hydrolyzable group is bonded.

In a preferable embodiment, R^{Si} is a group represented by the following formula (S1), (S2), (S3), or (S4):

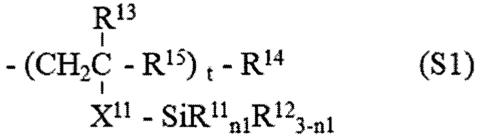

- SiR¹¹ₙ₁R¹²₃₋ₙ₁ (S2)

- SiR^{a1}ₖ₁R^{b1}₁₁R^{c1}ₘ₁ (S3)

- CR^{d1}ₖ₂R^{e1}₁₂R^{f1}ₘ₂ (S4)

- NR^{g1}R^{h1} (S5)

In the formulae, R¹¹ is independently a hydroxyl group or a hydrolyzable group.

Preferably, R¹¹ is independently a hydrolyzable group.

Preferably, R¹¹ is independently -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

In the formulae, R¹² is independently a hydrogen atom or a monovalent organic group. The monovalent organic group is a monovalent organic group excluding the hydrolyzable group.

In R¹², the monovalent organic group is preferably a C₁₋₂₀ alkyl group, more preferably a C₁₋₆ alkyl group, and even more preferably methyl group.

In the formulae, n1 is independently an integer of 0 to 3 for each (SiR¹¹ₙ₁R¹²₃₋ₙ₁) unit. However, when R^{Si} is a group represented by the formula (S1) or (S2), the R^{Si} moiety at the end of the formulae (1) and (2) (hereinafter, also simply referred to as the "ends" of the formulae (1) and (2)) has at least one (SiR¹¹ₙ₁R¹²₃₋ₙ₁) unit wherein n1 is 1 to 3. That is, in such ends, not all n1 are 0 at the same time. In other words, in the ends of the formula (1) and the formula (2), at least one Si atom to which a hydroxyl group or a hydrolyzable group is bonded is present.

n1 is independently an integer of preferably 1 to 3, more preferably 2 to 3, and even more preferably 3 for each (SiR¹¹ₙ₁R¹²₃₋ₙ₁) unit.

In the formulae, X¹¹ is independently a single bond or a divalent organic group. The divalent organic group is preferably -R²⁸-Oₓ-R²⁹- wherein R²⁸ and R²⁹ are independently a single bond or a C₁₋₂₀ alkylene group, and x is 0 or 1. The C₁₋₂₀ alkylene group may be linear or branched, and is preferably linear. The C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is independently a -C₁₋₆ alkylene-O-C₁₋₆ alkylene- or a -O-C₁₋₆ alkylene-.

In a preferable embodiment, X¹¹ is independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formulae, R¹³ is independently a hydrogen atom or a monovalent organic group. The monovalent organic group is preferably a C₁₋₂₀ alkyl group. The C₁₋₂₀ alkyl group may be linear or branched, and is preferably linear.

In a preferable embodiment, R¹³ is independently a hydrogen atom or a linear C₁₋₆ alkyl group, preferably a hydrogen atom or a linear C₁₋₃ alkyl group, and preferably a hydrogen atom or methyl group.

In the formulae, t is independently an integer of 2 or more.

In a preferable embodiment, t is independently an integer of 2 to 10, and preferably an integer of 2 to 6.

In the formulae, R¹⁴ is independently a hydrogen atom, a halogen atom, or -X¹¹-SiR¹¹ₙ₁R¹²₃₋ₙ₁. The halogen atom is preferably an iodine atom, a chlorine atom, or a fluorine atom, and more preferably a fluorine atom. In a preferable embodiment, R¹⁴ is a hydrogen atom.

In the formulae, R¹⁵ is independently a single bond, an oxygen atom, an alkylene group having 1 to 6 carbon atoms, or an alkyleneoxy group having 1 to 6 carbon atoms.

In one embodiment, R¹⁵ is independently an oxygen atom, an alkylene group having 1 to 6 carbon atoms, or an alkyleneoxy group having 1 to 6 carbon atoms.

In a preferable embodiment, R¹⁵ is a single bond.

In one embodiment, the formula (S1) is the following formula (S1-a): 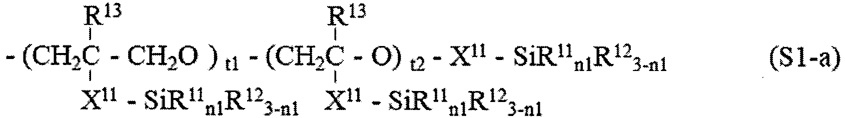 wherein
R¹¹, R¹², R¹³, X¹¹, and n1 have the same meanings as those described for the formula (S1);
t1 and t2 are independently an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferable embodiment, the formula (S1) is the following formula (S1-b): 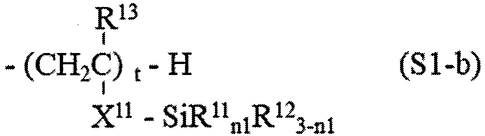 wherein R¹¹, R¹², R¹³, X¹¹, n1, and t have the same meanings as those described for the formula (S1).

In the formula, R^{a1} is independently -Z¹-SiR²¹ₚ₁R²²_{q1}R²³ᵣ₁.

Z¹ is independently an oxygen atom or a divalent organic group. The right side of the structure denoted as Z¹ below binds to (SiR²¹ₚ₁R²²_{q1}R²³ᵣ₁).

In a preferable embodiment, Z¹ is a divalent organic group.

In a preferable embodiment, Z¹ does not comprise a group that forms a siloxane bond with the Si atom to which Z¹ is bonded. Preferably, in the formula (S3), (Si-Z¹-Si) does not comprise a siloxane bond.

Z¹ is preferably a C₁₋₆ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6). The C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₆ alkylene group or -(CH₂)_{z3}-phenylene-(CH₂)_{z4}-, and preferably -phenylene-(CH₂)_{z4}-. When Z¹ is such a group, light resistance, in particular ultraviolet resistance, can be more increased.

In another preferable embodiment, Z¹ is a C₁₋₃ alkylene group. In one embodiment, Z¹ may be -CH₂CH₂CH₂-. In another embodiment, Z¹ may be - CH₂CH₂-.

R²¹ is independently -Z^{1'}-SiR^{21'}'_{p1'}R^{22'}_{q1'}R^{23'}_{r1'}.

Z¹ is independently an oxygen atom or a divalent organic group. The right side of the structure denoted as Z^{1'} below binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not comprise a group that forms a siloxane bond with the Si atom to which Z^{1'} is bonded. Preferably, in the formula (S3), (Si-Z^{1'}-Si) does not comprise a siloxane bond.

Z^{1'} is preferably a C₁₋₆ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}- (wherein z3' is an integer of 0 to 6 such as an integer of 1 to 6, z4' is an integer of 0 to 6 such as an integer of 1 to 6). The C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₆ alkylene group or -(CH₂)_{z3'}-phenylene-(CH₂)_{z4'}-, and preferably -phenylene-(CH₂)_{z4'}-. When Z^{1'} is such a group, light resistance, in particular ultraviolet resistance, can be more increased.

In another preferable embodiment, Z^{1'} is a C₁₋₃ alkylene group. In one embodiment, Z^{1'} may be -CH₂CH₂CH₂-. In another embodiment, Z^{1'} may be - CH₂CH₂-.

R^{21'} is independently -Z^{1"}-SiR^{22"}_{q1"}R^{23"}_{r1"}.

Z^{1"} is independently an oxygen atom or a divalent organic group. The right side of the structure denoted as Z^{1"} below binds to (SiR^{22"}_{q1"}R^{23"}_{r1"}).

In a preferable embodiment, Z^{1"} is a divalent organic group.

In a preferable embodiment, Z^{1"} does not comprise a group that forms a siloxane bond with the Si atom to which Z^{1"} is bonded. Preferably, in the formula (S3), (Si-Z^{1"}-Si) does not comprise a siloxane bond.

Z^{1"} is preferably a C₁₋₆ alkylene group, -(CH₂)_{z1"}-O-(CH₂)_{z2"}- (wherein z1" is an integer of 0 to 6, such as an integer of 1 to 6, and z2" is an integer of 0 to 6, such as an integer of 1 to 6), or -(CH₂)_{z3"}-phenylene-(CH₂)_{z4"}- (wherein z3" is an integer of 0 to 6, such as an integer of 1 to 6, and z4" is an integer of 0 to 6, such as an integer of 1 to 6). The C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₆ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is a C₁₋₃ alkylene group. In one embodiment, Z^{1"} may be -CH₂CH₂CH₂-. In another embodiment, Z^{1"} may be - CH₂CH₂-.

R^{22"} is independently a hydroxyl group or a hydrolyzable group.

Preferably, R^{22"} is independently a hydrolyzable group.

Preferably, R^{22"} is independently -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

R^{23"} is independently a hydrogen atom or a monovalent organic group. The monovalent organic group is a monovalent organic group excluding the hydrolyzable group.

In R^{23"}, the monovalent organic group is preferably a C₁₋₂₀ alkyl group, more preferably a C₁₋₆ alkyl group, and even more preferably methyl group.

q1" is independently an integer of 0 to 3, and r1" is independently an integer of 0 to 3. The sum of q1" and r1" is 3 in the (SiR^{22"}_{q1"}R^{23"}_{r1"}) unit.

q1" is independently an integer of preferably 1 to 3, more preferably 2 to 3, and even more preferably 3 for each (SiR^{22"}_{q1"}R^{23"}_{r1"}) unit.

R^{22'} is independently a hydroxyl group or a hydrolyzable group.

Preferably, R^{22'} is independently a hydrolyzable group.

Preferably, R^{22'} is independently -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

R^{23'} is independently a hydrogen atom or a monovalent organic group. The monovalent organic group is a monovalent organic group excluding the hydrolyzable group.

In R^{23'}, the monovalent organic group is preferably a C₁₋₂₀ alkyl group, more preferably a C₁₋₆ alkyl group, and even more preferably a methyl group.

p1' is independently an integer 0 to 3, q1' is independently an integer of 0 to 3, and r1' is independently an integer of 0 to 3. The sum of p', q1', and r1' is 3 in the (SiR^{21'}_{p1;}R^{22'}_{q1'}R^{22'}_{r1'}) unit.

In one embodiment, p1' is 0.

In one embodiment, p1' may be independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is independently an integer of 1 to 3, preferably an integer of 2 to 3, and even more preferably 3 for each (SiR^{21'}_{p1'}R^{22'}q_{1'}R^{23'}_{r1'}) unit.

R²² is independently a hydroxyl group or a hydrolyzable group.

Preferably, R²² is independently a hydrolyzable group.

Preferably, R²² is independently -OR^{j}, -OCOR^{j}, -O-N=CR₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

R²³ is independently a hydrogen atom or a monovalent organic group. The monovalent organic group is a monovalent organic group excluding the hydrolyzable group.

In R²³, the monovalent organic group is preferably a C₁₋₂₀ alkyl group, more preferably a C₁₋₆ alkyl group, and even more preferably a methyl group.

p1 is independently an integer of 0 to 3, q1 is independently an integer of 0 to 3, and r1 is independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is independently an integer of 1 to 3, preferably an integer of 2 to 3, and even more preferably 3 for each (SiR²¹ₚ₁R²²_{q1}R²³ᵣ₁) unit.

In the formula, R^{b1} is independently a hydroxyl group or a hydrolyzable group.

Preferably, R^{b1} is independently a hydrolyzable group.

Preferably, R^{b1} is independently -OR^{j}, -OCOR^{j}, -O-N=CR₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group,isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

In the formula, R^{c1} is independently a hydrogen atom or a monovalent organic group. The monovalent organic group is a monovalent organic group excluding the hydrolyzable group.

In R^{c1}, the monovalent organic group is preferably a C₁₋₂₀ alkyl group, more preferably a C₁₋₆ alkyl group, and even more preferably a methyl group.

k1 is independently an integer of 0 to 3, 11 is independently an integer of 0 to 3, and m1 is independently an integer of 0 to 3. The sum of k1, 11, and m1 is 3 in the (SiR^{a1}ₖ₁R^{b1}ₗ₁R^{c1}ₘ₁) unit.

In one embodiment, k1 is independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formulae (1) and (2), when R^{Si} is a group represented by the formula (S3), preferably, at least two Si atoms to which a hydroxyl group or a hydrolyzable group is bonded are present in the ends of the formulae (1) and (2).

In a preferable embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}ᵣ₁ (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'},

R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and preferably 3, p1 is 0, and q1 is 2 or 3 and preferably 3.

R^{d1} is independently -Z²-CR³¹ₚ₂R³²_{q2}R³³ᵣ₂.

Z² is independently a single bond, an oxygen atom, or a divalent organic group. The right side of the structure denoted as Z² below binds to (CR³¹ₚ₂R³²_{q2}R³³ᵣ₂).

In a preferable embodiment, Z² is a divalent organic group.

Z² is preferably a C₁₋₆ alkylene group, -(CH₂)_{z5}-O-(CH₂)_{z6}- (wherein z5 is an integer of 0 to 6 such as an integer of 1 to 6, and z6 is an integer of 0 to 6 such as an integer of 1 to 6), or -(CH₂)_{z7}-phenylene-(CH₂)_{z8}- (wherein z7 is an integer of 0 to 6 such as an integer of 1 to 6, and z8 is an integer of 0 to 6 such as an integer of 1 to 6). The C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferable embodiment, Z² is a C₁₋₃ alkylene group. In one embodiment, Z² may be -CH₂CH₂CH₂-. In another embodiment, Z² may be - CH₂CH₂-.

R³¹ is independently -Z^{2'}-CR^{32'}_{q2'}R^{33'}_{r2'}.

Z^{2'} is independently a single bond, an oxygen atom, or a divalent organic group. The right side of the structure denoted as Z^{2'} below binds to (CR^{32'}_{q2'}R³³'_{r2'}).

Z^{2'} is preferably a C₁₋₆ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or -(CH₂)_{z7'}-phenylene-(CH₂)_{z8'}- (wherein z7' is an integer of 0 to 6 such as an integer of 1 to 6, and z8' is an integer of 0 to 6 such as an integer of 1 to 6). The C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₆ alkylene group or -(CH₂)_{z7'}-phenylene-(CH₂)_{z8'}-, and preferably -phenylene-(CH₂)_{z8'}-. When Z^{2'} is such a group, light resistance, in particular ultraviolet resistance, can be more increased.

In another preferable embodiment, Z^{2'} is a C₁₋₃ alkylene group. In one embodiment, Z^{2'} may be -CH₂CH₂CH₂-. In another embodiment, Z^{2'} may be - CH₂CH₂-.

R^{32'} is independently -Z³-SiR³⁴ₙ₂R³⁵₃₋ₙ₂.

Z³ is independently a single bond, an oxygen atom, or a divalent organic group. The right side of the structure denoted as Z³ below binds to (SiR³⁴ₙ₂R³⁵₃₋ₙ₂).

In one embodiment, Z³ is an oxygen atom.

In one embodiment, Z³ is a divalent organic group.

Z³ is preferably a C₁₋₆ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6). The C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z³ is a C₁₋₃ alkylene group. In one embodiment, Z³ may be -CH₂CH₂CH₂-. In another embodiment, Z³ may be - CH₂CH₂-.

R³⁴ is independently a hydroxyl group or a hydrolyzable group.

Preferably, R³⁴ is each independently at each occurrence a hydrolyzable group.

Preferably, R³⁴ is independently -OR^{j}, -OCOR^{j}, -O-N=CR₂, -NR^{j}₂, -NHR^{j}, -NCO, or halogen (in these formulae, R^{j} represents a substituted or unsubstituted C₁₋₄ alkyl group), and more preferably -OR^{j} (for example, an alkoxy group). The examples of R^{j} include unsubstituted alkyl groups such as methyl group, ethyl group, propyl group, isopropyl group, n-butyl group, and isobutyl group; and substituted alkyl groups such as chloromethyl group. Among such groups, an alkyl group, in particular an unsubstituted alkyl group, is preferable, and methyl group or ethyl group is more preferable. In one embodiment, R^{j} is methyl group, and in another embodiment, R^{j} is ethyl group.

R³⁵ is independently a hydrogen atom or a monovalent organic group. The monovalent organic group is a monovalent organic group excluding the hydrolyzable group.

In R³⁵, the monovalent organic group is preferably a C₁₋₂₀ alkyl group, more preferably a C₁₋₆ alkyl group, and even more preferably a methyl group.

In the formula, n2 is independently an integer of 0 to 3 for each (SiR³⁴ₙ₂R³⁵₃₋ₙ₂) unit. However, when R^{Si} is a group represented by the formula (S4), the ends of the formulae (1) and (2) have at least one (SiR³⁴ₙ₂R³⁵₃₋ₙ₂) unit wherein n2 is 1 to 3. That is, in such ends, not all n2 are 0 at the same time. In other words, in the ends of the formula (1) and the formula (2), at least one Si atom to which a hydroxyl group or a hydrolyzable group is bonded is present.

n2 is independently an integer of preferably 1 to 3, more preferably 2 to 3, and even more preferably 3 for each (SiR³⁴ₙ₂R³⁵₃₋ₙ₂) unit.

R^{33'} is independently at each occurrence a hydrogen atom, a hydroxyl group, or a monovalent organic group. The monovalent organic group is a monovalent organic group excluding the hydrolyzable group.

The monovalent organic group of R^{33'} is preferably a C₁₋₂₀ alkyl group or - (CₛH₂ₛ)ₜ₁-(O-CₛH₂ₛ)ₜ₂H (wherein s is an integer of 1 to 6 and preferably an integer of 2 to 4, t1 is 1 or 0 and preferably 0, t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is independently an integer of 0 to 3, and r2' is independently an integer of 0 to 3. The sum of q2' and r2' is 3 in the (CR^{32'}_{q2'}R^{33'}_{r2'}) unit.

q2' is independently an integer of preferably 1 to 3, more preferably 2 to 3, and even more preferably 3 for each (CR^{32'}_{q2'}R^{33'}_{r2'}) unit.

R³² is independently at each occurrence -Z³-SiR³⁴ₙ₂R³⁵₃₋ₙ₂. -Z³-SiR³⁴_{n2R}³⁵₃₋ₙ₂ has the same meanings as those described for R^{32'}.

R³³ is independently at each occurrence a hydrogen atom, a hydroxyl group, or a monovalent organic group. The monovalent organic group is a monovalent organic group excluding the above hydrolyzable group.

The monovalent organic group of R³³ is preferably a C₁₋₂₀ alkyl group or - (CₛH₂ₛ)ₜ₁-(O-CₛH₂ₛ)ₜ₂H (wherein s is independently an integer of 1 to 6 and preferably an integer of 2 to 4, t1 is 1 or 0 and preferably 0, t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is independently an integer of 0 to 3, q2 is independently an integer of 0 to 3, and r2 is independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is independently an integer of 1 to 3, preferably an integer of 2 to 3, and even more preferably 3 for each (CR³¹ₚ₂R³²_{q2}R³³ᵣ₂) unit.

R^{e1} is independently -Z³-SiR³⁴ₙ₂R³⁵₃₋ₙ₂. -Z³-SiR³⁴ₙ₂R³⁵₃₋ₙ₂ has the same meanings as those described for R^{32'}.

R^{f1} is independently a hydrogen atom, a hydroxyl group, or a monovalent organic group. The monovalent organic group is a monovalent organic group excluding the hydrolyzable group.

The monovalent organic group of R^{f1} is preferably a C₁₋₂₀ alkyl group or - (CₛH₂ₛ)ₜ₁-(O-CₛH₂ₛ)ₜ₂H (wherein s is an integer of 1 to 6 and preferably an integer of 2 to 4, t1 is 1 or 0 and preferably 0, and t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is independently an integer of 0 to 3, 12 is independently an integer of 0 to 3, and m2 is independently an integer of 0 to 3. The sum of k2, l2, and m2 is 3 in the (CR^{d1}ₖ₂R^{e1}ₗ₂R^{f1}ₘ₂) unit.

In the formulae (1) and (2), when R^{Si} is a group represented by the formula (S4), preferably, at least two Si atoms to which a hydroxyl group or a hydrolyzable group is bonded are present in the ends of the formulae (1) and (2).

In one embodiment, when R^{Si} is a group represented by the formula (S4), two or more, for example, 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each end of the formula (1) and the formula (2).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, k2 is 0, l2 is 2 or 3 and preferably 3, and n2 is 2 or 3 and preferably 3 in the formula (S4).

R^{g1} and R^{h1} are independently -Z⁴-SiR¹¹ₙ₁R¹²₃₋ₙ₁, -Z⁴-SiR^{a1}ₖ₁R^{b1}ₗ₁R^{c1}ₘ₁, or - Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, 11, m1, k2, l2, and m2 have the same meanings as those described above.

In a preferable embodiment, R^{g1} and R^{h1} are independently -Z⁴-SiR¹¹ₙ₁R¹²₃₋n1.

Z⁴ is independently a single bond, an oxygen atom, or a divalent organic group. The right side of the structure denoted as Z⁴ below binds to (SiR¹¹ₙ₁R¹²₃₋ₙ₁).

In one embodiment, Z⁴ is an oxygen atom.

In one embodiment, Z⁴ is a divalent organic group.

Z⁴ is preferably a C₁₋₆ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6). The C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z⁴ is a C₁₋₃ alkylene group. In one embodiment, Z⁴ may be -CH₂CH₂CH₂-. In another embodiment, Z⁴ may be - CH₂CH₂-.

In one embodiment, R^{Si} is a group represented by the formula (S2), (S3), (S4), or (S5). These compounds are capable of forming a surface-treating layer having high surface lubricity.

In one embodiment, R^{Si} is a group represented by the formula (S3), (S4), or (S5). These compounds have a plurality of hydrolyzable groups at one end, and are therefore capable of forming a surface-treating layer that firmly adheres to a substrate and that has high abrasion durability.

In one embodiment, R^{Si} is a group represented by the formula (S3) or (S4). These compounds can have a plurality of hydrolyzable groups branching from one Si atom or C atom at one end, and are therefore capable of forming a surface-treating layer that has higher abrasion durability.

In one embodiment, R^{Si} is a group represented by the formula (S1).

In one embodiment, R^{Si} is a group represented by the formula (S2).

In one embodiment, R^{Si} is a group represented by the formula (S3).

In one embodiment, R^{Si} is a group represented by the formula (S4).

In one embodiment, R^{Si} is a group represented by the formula (S5).

In the formulae (1) and (2), X^{A} is interpreted as a linker connecting fluoropolyether moieties (R^{F1} and R^{F2}), which mainly provide water-repellency, surface lubricity, and the like, to a moiety (R^{Si}) providing a binding ability to a substrate. Accordingly, X^{A} may be a single bond or any group as long as the compound represented by the formula (1) or (2) can stably exist.

In the formula (1), α is an integer of 1 to 9, and β is an integer of 1 to 9. α and β may vary depending on the valence of X^{A}. The sum of α and β is the same as the valence of X^{A}. For example, when X^{A} is a decavalent organic group, the sum of α and β is 10, it may be contemplated that, for example, α is 9 and β is 1, α is 5 and β is 5, or α is 1 and β is 9. When X^{A} is a divalent organic group, α and β are each 1.

In the formula (2), γ is an integer of 1 to 9. γ may vary depending on the valence of X^{A}. That is, γ is a value obtained by subtracting 1 from the valence of X^{A}.

X^{A} is independently a single bond or a di- to decavalent organic group;

The di- to decavalent organic group in X^{A} is preferably a di- to octavalent organic group. In one embodiment, the di- to decavalent organic group is preferably a di- to tetravalent organic group, and more preferably a divalent organic group. In another embodiment, the di- to decavalent organic group is preferably a tri- to octavalent organic group, and more preferably a tri- to hexavalent organic group.

In one embodiment, X^{A} is a single bond or a divalent organic group, α is 1, and β is 1.

In one embodiment, X^{A} is a single bond or a divalent organic group, γ is 1.

In one embodiment, X^{A} is a tri- to hexavalent organic group, α is 1, and β is 2 to 5.

In one embodiment, X^{A} is a tri- to hexavalent organic group, and γ is 2 to 5.

In one embodiment, X^{A} is a trivalent organic group, α is 1, and β is 2.

In one embodiment, X^{A} is a trivalent organic group, and γ is 2.

When X^{A} is a single bond or a divalent organic group, the formulae (1) and (2) are represented by the following formulae (1') and (2'), respectively.

R^{F1}-X^{A}-R^{Si} (1')

R^{Si}-X^{A}-R^{F2}-X^{A}-R^{Si} (2')

In one embodiment, X^{A} is a single bond.

In another embodiment, X^{A} is a divalent organic group.

In one embodiment, X^{A} may be, for example, a single bond or a divalent organic group represented by the following formula:

-(R⁵¹)-(X⁵¹)_{q5}-

wherein
R⁵¹ represents a single bond, -(CH₂)ₛ₁-, or an o-, m- or p-phenylene group, and is preferably -(CH₂)ₛ₅-;
s5 is an integer of 1 to 20, preferably 1 to 6, more preferably 1 to 3, and even more preferably 1 or 2;
X⁵¹ represents -(X⁵²)ₗ₅-;
X⁵² independently represents a group selected from the group consisting of - O-, -S-, o-, m- or a p-phenylene group, -C(O)O-, -Si(R⁵³)₂-, -(Si(R⁵³)₂O)ₘ₅-Si(R⁵³)₂-, -CONR⁵⁴-, -O-CONR⁵⁴-, -NR⁵⁴- and -(CH₂)ₙ₅-;
R⁵³ independently represents a phenyl group, a C₁₋₆ alkyl group, or a C₁₋₆ alkoxy group, preferably a phenyl group or a C₁₋₆ alkyl group, and more preferably a methyl group;
R⁵⁴ independently represents a hydrogen atom, a phenyl group, or a C₁₋₆ alkyl group (preferably a methyl group);
m5 is independently an integer of 1 to 100, and preferably an integer of 1 to 20;
n5 is independently an integer of 1 to 20, preferably an integer of 1 to 6, and more preferably an integer of 1 to 3;
15 is an integer of 1 to 10, preferably an integer of 1 to 5, and more preferably an integer of 1 to 3;
p5 is 0 or 1; and
q5 is 0 or 1,
provided that at least one of p5 and q5 is 1, and the occurrence order of the respective repeating units enclosed in parentheses provided with p5 or q5 is not limited.
Here, X^{A} (typically a hydrogen atom in X^{A}) is optionally substituted with one or more substituents selected from a fluorine atom, a C₁₋₃ alkyl group, and a C₁₋₃ fluoroalkyl group. In a preferable embodiment, X^{A} is not substituted with any of these groups.

In a preferable embodiment, X^{A} is independently -(R⁵¹)ₚ₅-(X⁵¹)_{q5}-R⁵²-. R⁵² represents a single bond, -(CH₂)ₜ₅-, or an o-, m- or p-phenylene group, and is preferably -(CH₂)ₜ₅-. t5 is an integer of 1 to 20, preferably an integer of 2 to 6, and more preferably an integer of 2 to 3. Here, R⁵² (typically a hydrogen atom in R⁵²) is optionally substituted with one or more substituents selected from a fluorine atom, a C₁₋₃ alkyl group, and a C₁₋₃ fluoroalkyl group. In a preferable embodiment, R⁵⁶ is not substituted with any of these groups.

Preferably, X^{A} may be independently
a single bond,
a C₁₋₂₀ alkylene group,

   -R⁵¹-X⁵³-R⁵²-,

   or

   -X⁵⁴-R⁵²-
[wherein R⁵¹ and R⁵² have the same meanings as above;
   X⁵³ represents

   -O-,

   -S-,

   -C(O)O-,

   -CONR⁵⁴-,

   -O-CONR⁵⁴-,

   -Si(R⁵³)₂-,

   -(Si(R⁵³)₂O)ₘ₅-Si(R⁵³)₂-,

   -O-(CH₂)ᵤ₅-(Si(R⁵³)₂O)ₘ₅-Si(R⁵³)₂-,

   -O-(CH₂)ᵤ₅-Si(R⁵³)₂-O-Si(R⁵³)₂-CH₂CH₂-Si(R⁵³)₂-O-Si(R⁵³)₂-,

   -O-(CH₂)ᵤ₅-Si(OCH₃)₂OSi(OCH₃)₂-,

   -CONR⁵⁴-(CH₂)ᵤ₅-(Si(R⁵³)₂O)ₘ₅-Si(R⁵³)₂-,

   -CONR⁵⁴-(CH₂)ᵤ₅-N(R⁵⁴)-, or

   -CONR⁵⁴-(o-, m- or p-phenylene)-Si(R⁵³)₂-,
(wherein R⁵³, R⁵⁴, and m5 have the same meanings as above, and
   u5 is an integer of 1 to 20, preferably an integer of 2 to 6, and more preferably an integer of 2 to 3); and
   X⁵⁴ represents

   -S-,

   -C(O)O-,

   -CONR⁵⁴-,

   -O-CONR⁵⁴-,

   -CONR⁵⁴-(CH₂)ᵤ₅-(Si(R⁵⁴)₂O)ₘ₅-Si(R⁵⁴)₂-,

   -CONR⁵⁴-(CH₂)ᵤ₅-N(R⁵⁴)-, or

   -CONR⁵⁴-(o-, m- or p-phenylene)-Si(R⁵⁴)₂-,
(wherein the respective symbols have the same meanings as above)].

More preferably, X^{A} is independently
a single bond,
a C₁₋₂₀ alkylene group,

   -(CH₂)ₛ₅-X⁵³-,

   -(CH₂)ₛ₅-X⁵³-(CH₂)ₜ₅-

   -X⁵⁴-,

   or

   -X⁵⁴-(CH₂)ₜ₅-,
wherein X⁵³, X⁵⁴, s5, and t5 have the same meanings as above.

More preferably, X^{A} may be independently
a single bond,
a C₁₋₂₀ alkylene group,

   -(CH₂)ₛ₅-X⁵³-(CH₂)ₜ₅-,

   or

   -X⁵⁴-(CH₂)ₜ₅-,
wherein the respective symbols have the same meanings as above.

In a preferable embodiment, X^{A} may be independently
a single bond,
a C₁₋₂₀ alkylene group,

   -(CH₂)ₛ₅-X⁵³-,

   or

   -(CH₂)ₛ₅-X⁵³-(CH₂)ₜ₅-,
wherein
   X⁵³ is -O-, -CONR⁵⁴-, or -O-CONR⁵⁴-,
   R⁵⁴ independently represents a hydrogen atom, a phenyl group, or a C₁₋₆ alkyl group,
   s5 is an integer of 1 to 20, and
   t5 is an integer of 1 to 20.

In a preferable embodiment, X^{A} may be independently

-(CH₂)ₛ₅-O-(CH₂)ₜ₅-

or

-CONR⁵⁴-(CH₂)ₜ₅-,

wherein
R⁵⁴ independently represents a hydrogen atom, a phenyl group, or a C₁₋₆ alkyl group,
s5 is an integer of 1 to 20, and
t5 is an integer of 1 to 20.

In one embodiment, X^{A} may be independently
a single bond,
a C₁₋₂₀ alkylene group,

   -(CH₂)ₛ₅-O-(CH₂)ₜ₅-,

   -(CH₂)ₛ₅-(Si(R⁵³)₂O)ₘ₅-Si(R⁵³)₂-(CH₂)ₜ₅-,

   -(CH₂)ₛ₅-O-(CH₂)ᵤ₅-(Si(R⁵³)₂O)ₘ₅-Si(R⁵³)₂-(CH₂)ₜ₅-, or

   -(CH₂)ₛ₅-O-(CH₂)ₜ₅-Si(R⁵³)₂-(CH₂)ᵤ₅-Si(R⁵³)₂-(CᵥH₂ᵥ)-,
wherein R⁵³, m5, s5, t5, and u5 have the same meanings as above, and v5 is an integer of 1 to 20, preferably an integer of 2 to 6, and more preferably an integer of 2 to 3.

In the formula, -(CᵥH₂ᵥ)- may be linear or branched, and may be, for example, -CH₂CH₂-, -CH₂CH₂CH₂-, -CH(CH₃)-, or -CH(CH₃)CH₂-.

X^{A} may be independently substituted with one or more substituents selected from a fluorine atom, a C₁₋₃ alkyl group, and a C₁₋₃ fluoroalkyl group (preferably a C₁₋₃ perfluoroalkyl group). In one embodiment, X^{A} is unsubstituted.

The left side of each X^{A} is bonded to R^{F1} or R^{F2}, and the right side is bonded to R^{Si}.

In one embodiment, X^{A} may be independently a group other than an -O-C₁₋₆ alkylene group.

In another embodiment, the examples of X^{A} include the following groups: 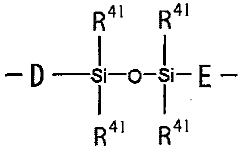 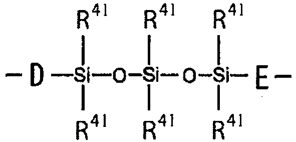 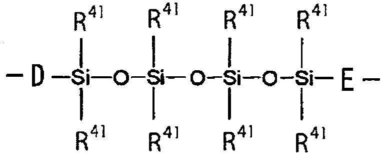 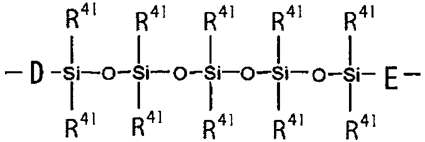 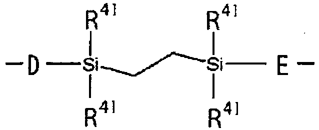 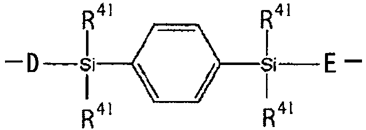 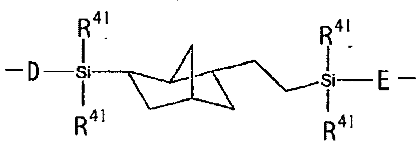 wherein R⁴¹ is independently a hydrogen atom, a phenyl group, an alkyl group having 1 to 6 carbon atoms, or a C₁₋₆ alkoxy group, and is preferably a methyl group;
D is a group selected from

-CH₂O(CH₂)₂-,

-CH₂O(CH₂)₃-,

-CF₂O(CH₂)₃-,

-(CH₂)₂-,

-(CH₂)₃-,

-(CH₂)₄-,

-CONH-(CH₂)₃-,

-CON(CH₃)-(CH₂)₃-,

-CON(Ph)-(CH₂)₃-

(wherein Ph means phenyl), and 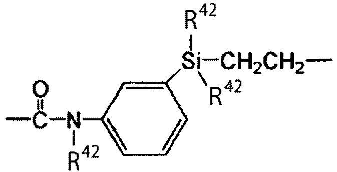 wherein R⁴² independently represents a hydrogen atom, a C₁₋₆ alkyl group, or a C₁₋₆ alkoxy group, preferably a methyl group or a methoxy group, and more preferably a methyl group; and
E is -(CH₂)ₙ- (n is an integer of 2 to 6),
provided that D is bonded to R^{F1} or R^{F2} of the molecular backbone, and E is bonded to R^{Si}.

Specific examples of X^{A} include:
a single bond,

   -CH₂OCH₂-,

   -CH₂O(CH₂)₂-,

   -CH₂O(CH₂)₃-,

   -CH₂O(CH₂)₄-,

   -CH₂O(CH₂)₅-,

   -CH₂O(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-

   -CH₂OCH₂CF₂CF₂OCF₂CF₂CF₂-,

   -CH₂OCH₂CF₂CF₂OCF(CF₃)CF₂OCF₂-,

   -CH₂OCH₂CF₂CF₂OCF(CF₃)CF₂OCF₂CF₂-,

   -CH₂OCH₂CF₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-,

   -CH₂OCF₂CHFOCF₂CF₂CF₂-C(O)NH-CH₂-,

   -CH₂OCH₂(CH₂)₇CH₂Si(OCH₃)₂OSi(OCH₃)₂(CH₂)₂Si(OCH₃)₂OSi(OCH₃)₂(CH₂)₂-,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH₂CH₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   -(CH₂)₂-Si(CH₃)₂-(CH₂)₂-,

   -CH₂-,

   -(CH₂)₂-,

   -(CH2)3-,

   -(CH₂)₄-,

   -(CH₂)₅-,

   -(CH₂)₆-,

   -CO-,

   -CONH-,

   -CONH-CH₂-,

   -CONH-(CH₂)₂-,

   -CONH-(CH₂)₃-,

   -CONH-(CH₂)₄-,

   -CONH-(CH₂)₅-,

   -CONH-(CH₂)₆-,

   -CON(CH₃)-CH₂-,

   -CON(CH₃)-(CH₂)₂-,

   -CON(CH₃)-(CH₂)₃-,

   -CON(CH₃)-(CH₂)₄-,

   -CON(CH₃)-(CH₂)₅-,

   -CON(CH₃)-(CH₂)₆-,

   -CON(Ph)-CH₂- (wherein Ph means phenyl),

   -CON(Ph)-(CH₂)₂- (wherein Ph means phenyl),

   -CON(Ph)-(CH₂)₃- (wherein Ph means phenyl),

   -CON(Ph)-(CH₂)₄- (wherein Ph means phenyl),

   -CON(Ph)-(CH₂)₅- (wherein Ph means phenyl),

   -CON(Ph)-(CH₂)₆- (wherein Ph means phenyl),

   -CONH-(CH₂)₂NH(CH₂)₃-,

   -CONH-(CH₂)₆NH(CH₂)₃-,

   -CH₂O-CONH-(CH₂)₃-,

   -CH₂O-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH-(CH₂)₃Si(CH₃)₂O(Si(CH₃)₂O)₂₀Si(CH₃)₂(CH₂)₂-,

   -C(O)O-(CH₂)₃-,

   -C(O)O-(CH₂)₆-,

   -CH₂-O-(CH₂)₃-Si(CH₃)₂-(CH₂)₂-Si(CH₃)₂-(CH₂)₂-,

   -CH₂-O-(CH₂)₃-Si(CH₃)₂-(CH₂)₂-Si(CH₃)₂-CH(CH₃)-,

   -CH₂-O-(CH₂)₃-Si(CH₃)₂-(CH₂)₂-Si(CH₃)₂-(CH₂)₃-,

   -CH₂-O-(CH₂)₃-Si(CH₃)₂-(CH₂)₂-Si(CH₃)₂-CH(CH₃)-CH₂-,

   -OCH₂-,

   -O(CH₂)₃-,

   -OCFHCF₂-,

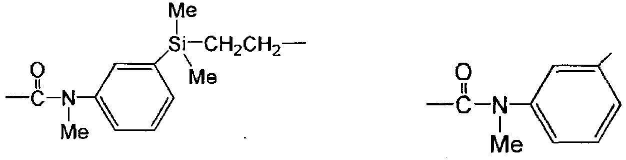

   ,

In yet another embodiment, X^{A} is independently a group represented by the formula: -(R¹⁶)ₓ₁-(CFR¹⁷)_{y1}-(CH₂)_{z1}-. In the formula, x1, y1, and z1 are independently an integer of 0 to 10, the sum of x1, y1, and z1 is 1 or more, and the occurrence order of the respective repeating units enclosed in parentheses is not limited in the formula.

In the formula, R¹⁶ is independently an oxygen atom, phenylene, carbazolylene, -NR¹⁸- (wherein R¹⁸ represents a hydrogen atom or an organic group), or a divalent organic group. Preferably, R¹⁸ is an oxygen atom or a divalent polar group.

The examples of the "divalent polar group" include, but are not limited to, - C(O)-, -C(=NR¹⁹)-, and -C(O)NR¹⁹- (in these formulae, R¹⁹ represents a hydrogen atom or a lower alkyl group). Such a "lower alkyl group" is, for example, an alkyl group having 1 to 6 carbon atoms, such as methyl, ethyl, or n-propyl, each of which may be substituted with one or more fluorine atoms.

In the formula, R¹⁷ is independently a hydrogen atom, a fluorine atom, or a lower fluoroalkyl group, and is preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or a pentafluoroethyl group, and even more preferably a trifluoromethyl group.

In yet another embodiment, the examples of X^{A} include the following groups: 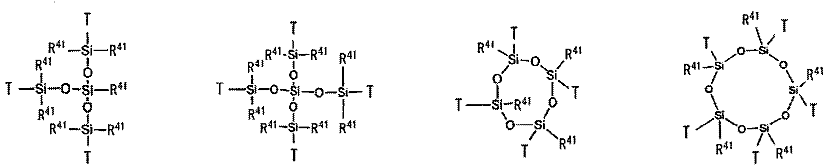 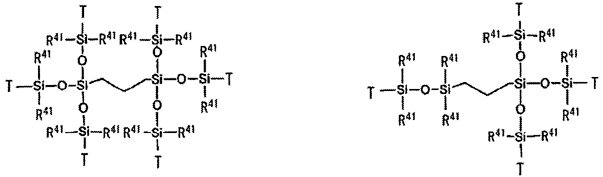 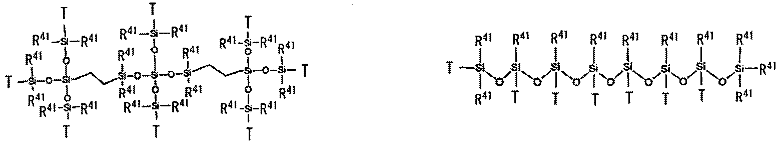 wherein
R⁴¹ is independently a hydrogen atom, a phenyl group, an alkyl group having 1 to 6 carbon atoms, or a C₁₋₆ alkoxy group, and is preferably a methyl group;
some T groups in each X^{A} group are the following groups bonded to R^{F1} or R^{F2} of the molecular backbone:

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃-

   (wherein Ph means phenyl), or

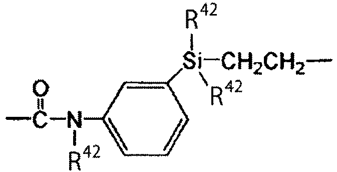

wherein R⁴² independently represents a hydrogen atom, a C₁₋₆ alkyl group, or a C₁₋₆ alkoxy group, preferably a methyl group or a methoxy group, and more preferably a methyl group; and
some other T groups are bonded to R^{Si} of the molecular backbone, and the remaining T groups, if present, are independently methyl group, phenyl group, a C₁₋₆ alkoxy group, or a radical scavenging group, or a UV absorbing group.

The radical scavenging group is not limited as long as it can scavenge a radical generated by light irradiation, and their examples include residues of benzophenones, benzotriazoles, benzoates, phenyl salicylates, crotonic acids, malonates, organoacrylates, hindered amines, hindered phenols, and triazines.

The UV absorbing group is not limited as long as it can absorb ultraviolet rays, and their examples include residues of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferable embodiment, the examples of preferable radical scavenging groups or UV absorbing groups include:

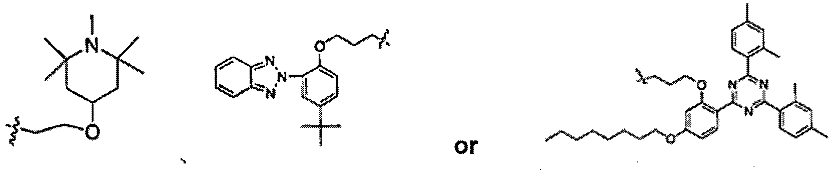

In this embodiment, X^{A} may be independently a tri- to decavalent organic group.

In yet another embodiment, the examples of X^{A} include the following groups: 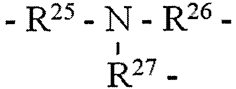 wherein R²⁵, R²⁶, and R²⁷ are independently a di- to hexavalent organic group; and
R²⁵ is bonded to at least one R^{F1} and R²⁶ and R²⁷ are each bonded to at least one R^{Si}.

In one embodiment, R²⁵ is a single bond, a C₁₋₂₀ alkylene group, a C₃₋₂₀ cycloalkylene group, a C₅₋₂₀ arylene group, -R⁵⁷-X⁵⁸-R⁵⁹-, -X⁵⁸-R⁵⁹-, or -R⁵⁷-X⁵⁸-. R⁵⁷ and R⁵⁹ are independently a single bond, a C₁₋₂₀ alkylene group, a C₃₋₂₀ cycloalkylene group, or a C₅₋₂₀ arylene group. X⁵⁸ is -O-, -S-, -CO-, -O-CO-, or - COO-.

In one embodiment, R²⁶ and R²⁷ are independently a hydrocarbon, or a group having at least one atom selected from N, O, and S at a terminal or in the main chain of a hydrocarbon, and the preferable examples include a C₁₋₆ alkyl group, -R³⁶-R³⁷-R³⁶, and -R³⁶-CHR³⁸₂-. Here, R³⁶ is independently a single bond or an alkyl group having 1 to 6 carbon atoms, and preferably an alkyl group having 1 to 6 carbon atoms. R³⁷ is N, O, or S, and preferably N or O. R³⁸ is -R⁴⁵-R⁴⁶-R⁴⁵-, -R⁴⁶-R⁴⁵-, or -R⁴⁵-R⁴⁶-. Here, R⁴⁵ is independently an alkyl group having 1 to 6 carbon atoms. R⁴⁶ is N, O, or S, and preferably O.

In this embodiment, X^{A} may be independently a tri- to decavalent organic group.

In yet another embodiment, the examples of X^{A} include a group represented by the following: 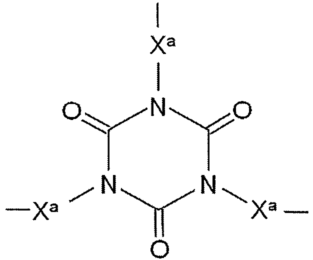 wherein X^{a} is a single bond or a divalent organic group.

X^{a} is a single bond or a divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent organic group having 1 to 10 carbon atoms and containing at least one bond selected from the group consisting of an ether bond, an ester bond, an amide bond, and a sulfide bond.

X^{a} is even more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are independently H, F, OH, or -OSi(OR¹²¹)₃, (wherein three R¹²¹ are independently an alkyl group having 1 to 4 carbon atoms),
X^{a1} is -C(=O)NH-, -NHC(=O)-, -O-, -C(=O)O-, -OC(=O)-, -OC(=O) O-, or - NHC(=O)NH- (the left side of each bond is bonded to CX¹²¹X¹²²), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CF₂)ₘ₁₁-(CH₂)ₘ₁₂-O-(CH₂)ₘ₁₃-

   wherein m11 is an integer of 1 to 3, m12 is an integer of 1 to 3, and m13 is an integer of 1 to 3;
a group represented by the following formula:

   -(CF2)ₘ₁₄-(CH₂)ₘ₁₅-O-CH₂CH(OH)-(CH₂)ₘ₁₆-

   wherein m14 is an integer of 1 to 3, m15 is an integer of 1 to 3, and m16 is an integer of 1 to 3;
a group represented by the following formula:

   -(CF₂)ₘ₁₇-(CH₂)ₘ₁₈-

   wherein m17 is an integer of 1 to 3, and m18 is an integer of 1 to 3;
a group represented by the following formula:

   -(CF₂)ₘ₁₉-(CH₂)ₘ₂₀-O-CH₂CH(OSi(OCH₃)₃)-(CH₂)ₘ₂₁-

   wherein m19 is an integer of 1 to 3, m20 is an integer of 1 to 3, and m21 is an integer of 1 to 3; or
a group represented by the following formula:

   -(CH₂)ₘ₂₂-
wherein m22 is an integer of 1 to 3.

X^{a} is not limited, and the specific examples include
-CH₂-, -C₂H₄-, -C₃H₆-, -C₄H₈-, -C₄H₈-O-CH₂-, -CO-O-CH₂-CH(OH)-CH₂-, -(CF₂)ₙ₅-(n5 is an integer of 0 to 4), -(CF₂)ₙ₅-(CH₂)ₘ₅- (n5 and m5 are independently an integer of 0 to 4), -CF₂CF₂CH₂OCH₂CH(OH)CH₂-, and - CF₂CF₂CH₂OCH₂CH(OSi(OCH₃)₃)CH₂-.

In this embodiment, X^{A} may be independently a di- or trivalent organic group.

The average molecular weight of the fluoropolyether group-containing silane compound represented by the formula (1) or the formula (2) is not limited, and may be 5 × 10² to 1 × 10⁵. In this range, the average molecular weight is preferably 2,000 to 32,000 and more preferably 2,500 to 12,000 from the viewpoint of abrasion durability. The "average molecular weight" refers to a number average molecular weight, and the "average molecular weight" is a value obtained by ¹⁹F-NMR measurement.

The content of the fluoropolyether group-containing silane compound represented by the formula (1) or (2) is preferably 90% by mass or more and 100% by mass or less, and more preferably 95% by mass or more and 100% by mass or less, based on total 100% by mass of the fluoropolyether group-containing silane compound (A).

The content of the fluoropolyether group-containing silane compound (A) may preferably be 0.01% by mass or more and 5% by mass or less, more preferably 0.05% by mass or more and 0.2% by mass or less, even more preferably 0.07% by mass or more and 0.15% by mass or less, and particularly preferably 0.09% by mass or more and 0.12% by mass or less, based on total 100% by mass of the surface-treating agent. A content of the fluoropolyether group-containing silane compound within the above range enables higher heat resistance to be obtained.

In the composition of the present disclosure, non-volatile substance is the portion excluding the solvent from the total amount of the composition.

### (Low molecular weight fluorine-containing compound or low molecular weight silane compound (B))

The low molecular weight fluorine-containing compound or low molecular weight silane compound typically represents a low molecular weight compound containing a fluorine atom or a low molecular weight compound containing a Si atom, and comprises one or two or more selected from low molecular weight fluorine-containing compounds having an ether bond or an aromatic group and low molecular weight silane coupling agents. One or two or more low molecular weight fluorine-containing compounds having an ether bond or an aromatic group may be used, and one or two or more low molecular weight silane coupling agents may be used.

While not wishing to be bound by any particular theory, it is believed that the present disclosure, by containing the low molecular weight fluorine-containing compound having an ether bond or an aromatic group, can suppress aggregation of the fluoropolyether group-containing silane compound (A). As a result, it is believed that, even after the surface-treating agent is stored for a long period of time, a surface-treating layer having good heat resistance can be formed. In addition, having a portion that is capable of reacting with water, the low molecular weight silane coupling agent is believed to be capable of trapping moisture in the surface-treating agent. As a result, it is believed that, even after the surface-treating agent is stored for a long period of time, a surface-treating layer having good heat resistance can be formed.

The low molecular weight fluorine-containing compound or low molecular weight silane compound (B) preferably comprises one or two or more selected from the group consisting of a low molecular weight fluorine-containing compound having an ether bond (B-1), a low molecular weight fluorine-containing compound having an aromatic group (B-2), and a low molecular weight silane coupling agent (B-3).

The low molecular weight fluorine-containing compound having an ether bond (B-1) may typically be a compound having one or more ether bonds and one or more fluorine atoms. The number of ether bonds in the low molecular weight fluorine-containing compound having an ether bond (B-1) may preferably be 1 or more and 2 or less, and more preferably 1, per molecule.

The number of carbon atoms in the low molecular weight fluorine-containing compound having an ether bond (B-1) may preferably be 2 or more and 20 or less, more preferably 3 or more and 8 or less, and even more preferably 4 or more and 6 or less.

The low molecular weight fluorine-containing compound having an ether bond (B-1) preferably comprises a compound represented by the following formula:

R^{B1}-O-R^{B2} (B1)

wherein
R^{B1} represents a C₁₋₁₀ perfluoroalkyl group, and
R^{B2} represents a C₁₋₁₀ alkyl group.

R^{B1} is a C₁₋₁₀ perfluoroalkyl group that may be linear or branched, preferably a linear or branched C₂₋₇ perfluoroalkyl group, and more preferably a linear or branched C₃₋₆ perfluoroalkyl group.

R^{B2} is a C₁₋₁₀ alkyl group that may be linear or branched, preferably a linear or branched C₁₋₅ alkyl group, and more preferably a linear or branched C₁₋₃ alkyl group.

The content of the compound represented by the formula (B1) may preferably be 70% by mass or more and 100% by mass or less, more preferably 80% by mass or more and 100% by mass or less, and even more preferably 90% by mass or more and 100% by mass or less, based on the total amount of the low molecular weight fluorine-containing compound having an ether bond (B-1).

The examples of the low molecular weight fluorine-containing compound having an ether bond (B-1) include methyl perfluoroisobutyl ether, methyl perfluorobutyl ether, ethyl perfluoroisobutyl ether, ethyl perfluorobutyl ether, perfluoroisobutyl methyl ether, and perfluoropentyl methyl ether.

The content of the low molecular weight fluorine-containing compound having an ether bond (B-1) may preferably be 2 parts by mass or more and 1,000 parts by mass or less, and more preferably 4 parts by mass or more and 600 parts by mass or less, based on 1 part by mass of the fluoroether group-containing silane compound (A).

The low molecular weight fluorine-containing compound having an aromatic group (B-2) may typically be a compound containing one or more aromatic groups and fluorine atoms. An example of the aromatic group may be a benzene ring.

The low molecular weight fluorine-containing compound having an aromatic group (B-2) preferably comprises a compound represented by the following formula: 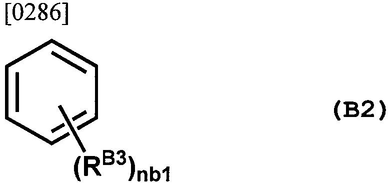 wherein
R^{B3} independently represents a fluorine atom or a C₁₋₁₀ perfluoroalkyl group, and
nb1 represents an integer of 1 to 6.

The C₁₋₁₀ perfluoroalkyl group of R^{B3} may be linear or branched, and is preferably a linear or branched C₁₋₅ perfluoroalkyl group, and more preferably a linear or branched C₁₋₃ perfluoroalkyl group. In one embodiment, R^{B3} is preferably a fluorine atom. In another embodiment, R^{B3} is preferably a linear or branched C₁₋₃ perfluoroalkyl group.

nb1 is an integer of 1 to 6, preferably 3 to 6, and particularly preferably 6.

The content of the compound represented by the formula (B2) may preferably be 70% by mass or more and 100% by mass or less, more preferably 80% by mass or more and 100% by mass or less, and even more preferably 90% by mass or more and 100% by mass or less, based on the total amount of the low molecular weight fluorine-containing compound having an aromatic group (B-2).

The low molecular weight fluorine-containing compound having an aromatic group (B-2) may be hexafluorobenzene.

The content of the low molecular weight fluorine-containing compound having an aromatic group (B-2) in one embodiment is preferably 1 part by mass or more and 50 parts by mass or less, and more preferably 5 parts by mass or more and 30 parts by mass or less, based on 100 parts by mass of the fluoroether group-containing silane compound (A). In another embodiment, the content of the low molecular weight fluorine-containing compound having an aromatic group (B-2) is preferably 0 parts by mass based on 100 parts by mass of the fluoroether group-containing silane compound (A).

The low molecular weight silane coupling agent (B-3) is a compound containing a hydrolyzable group bonded to a Si atom and, in a preferable embodiment, further comprises a hydrocarbon group bonded to the Si atom.

The low molecular weight silane coupling agent (B-3) is preferably represented by the following formula:

SiR^{B4}_{nb2}R^{B5}_{(4-nb2)} (B3)

wherein
R^{B4} represents a hydrolyzable group,
R^{B5} represents a hydrocarbon group, and
nb2 represents an integer of 1 to 4.

The hydrolyzable group of R^{B4} refers to a group that can undergo a hydrolysis reaction, for examample, a group that can be removed from the main backbone of the compound by a hydrolysis reaction. The examples of the hydrolyzable group of R^{B4} include -OR^{j}, -OCOR^{j}, -O-N=CR^{j}₂, -NR^{j}₂, -NHR^{j}, -NCO, and a halogen (wherein Rⁱ represents a substituted or unsubstituted C₁₋₄ alkyl group), and -ORⁱ (for example, an alkoxy group) is preferable. The examples of R^{J} include unsubstituted alkyl groups such as methyl group, ethyl group, propyl group, isopropyl group, n-butyl group, and isobutyl group; and substituted alkyl groups such chloromethyl group. Among such groups, the hydrolyzable group of R^{B4} is preferably an alkyl group, in particular an unsubstituted alkyl group, and more preferably methyl group or ethyl group.

The hydrocarbon group of R^{B5} is a group that comprises carbon and hydrogen and that is obtained by removing one hydrogen atom from a hydrocarbon. The hydrocarbon group of R^{B5} is not limited, and their examples include C₁₋₂₀ hydrocarbon groups such as an aliphatic hydrocarbon group. The "aliphatic hydrocarbon group" may be linear, branched, or cyclic, and may be saturated or unsaturated. The hydrocarbon group of R^{B5} may comprise one or more ring structures. The hydrocarbon group of R^{B5} is preferably a linear or branched C₁₋₅ alkyl group or a linear or branched C₂₋₅ alkenyl group, and more preferably a linear or branched C₁₋₃ alkyl group or a linear or branched C₂₋₃ alkenyl group.

The content of the compound represented by the formula (B3) may preferably be 70% by mass or more and 100% by mass or less, more preferably 80% by mass or more and 100% by mass or less, and even more preferably 90% by mass or more and 100% by mass or less, based on the total amount of the low molecular weight silane coupling agent (B-3).

The examples of the low molecular weight silane coupling agent (B-3) include vinyltrimethoxysilane, vinyltriethoxysilane, methyltrimethoxysilane, and methyltriethoxysilane.

In one embodiment, the content of the low molecular weight silane coupling agent (B-3) may preferably be 1 part by mass or more and 50 parts by mass or less, and more preferably 5 parts by mass or more and 30 parts by mass or less, based on 100 parts by mass of the fluoropolyether group-containing silane compound (A). In another embodiment, the content of the low molecular weight silane coupling agent (B-3) may preferably be 0 parts by mass based on 100 parts by mass of the fluoropolyether group-containing silane compound (A).

Typically, the molecular weight of the low molecular weight fluorine-containing compound or low molecular weight silane compound (B) may preferably be 450 or less, more preferably 120 or more and 400 or less, and even more preferably 140 or more and 300 or less.

The content of the low molecular weight fluorine-containing compound or low molecular weight silane compound (B) is preferably 1 part by mass or more and 100,000 parts by mass or less, more preferably 2 parts by mass or more and 80,000 parts by mass or less, and even more preferably 5 parts by mass or more and 60,000 parts by mass or less, based on 100 parts by mass of the fluoropolyether group-containing silane compound (A). In one embodiment, the content of the low molecular weight fluorine-containing compound or low molecular weight silane compound (B) is preferably 2 parts by mass or more and 1,000 parts by mass or less, and more preferably 4 parts by mass or more and 600 parts by mass or less, based on 1 part by mass of the fluoropolyether group-containing silane compound (A). In another embodiment, the content of the low molecular weight fluorine-containing compound or low molecular weight silane compound (B) is preferably 1 part by mass or more and 50 parts by mass or less, and more preferably 5 parts by mass or more and 30 parts by mass or less, based on 100 parts by mass of the fluoropolyether group-containing silane compound (A).

### (Fluorinated solvent (C))

The fluorinated solvent (C) comprises a compound represented by the following formula:

CR¹R²=CR³R⁴ (C1)

wherein
R¹ represents a C₁₋₆ perfluoroalkyl group or a fluorine atom,
R² represents a C₁₋₆ perfluoroalkyl group,
R³ represents a C₁₋₆ perfluoroalkyl group, and
R⁴ represents a C₁₋₆ perfluoroalkyl group.

While not wishing to be bound by any particular theory, it is believed that, in the present disclosure, the fluorinated solvent (C) comprises neither hydrogen atoms nor oxygen atoms, the polarity of which is low, and, accordingly, the fluorinated solvent (C) can reduce the moisture content incorporated into the surface-treating agent. As a result, it is believed that, even after the surface-treating agent is stored for a long period of time, a surface-treating layer having good heat resistance can be formed.

The C₁₋₆ perfluoroalkyl group of R¹ may be linear or branched, and is preferably a linear or branched C₁₋₅ perfluoroalkyl group and more preferably a linear or branched C₁₋₃ perfluoroalkyl group. In one embodiment, R¹ is preferably a fluorine atom. In another embodiment, R¹ is preferably a C₁₋₃ perfluoroalkyl group.

The C₁₋₆ perfluoroalkyl group of R² may be linear or branched, and is preferably a linear or branched C₁₋₅ perfluoroalkyl group and more preferably a linear or branched C₁₋₃ perfluoroalkyl group.

The C₁₋₆ perfluoroalkyl group of R³ may be linear or branched, and is preferably a linear or branched C₁₋₅ perfluoroalkyl group and more preferably a linear or branched C₁₋₃ perfluoroalkyl group.

The C₁₋₆ perfluoroalkyl group of R⁴ may be linear or branched, and is preferably a linear or branched C₁₋₅ perfluoroalkyl group and more preferably a linear or branched C₁₋₃ perfluoroalkyl group.

The total number of carbon atom in the compound represented by the formula (C1) is preferably 5 or more and 20 or less, more preferably 6 or more and 15 or less, and even more preferably 7 or more and 12 or less.

The content of the compound represented by the formula (C1) may preferably be 5% by mass or more and 100% by mass or less, more preferably 30% by mass or more and 80% by mass or less, and even more preferably 50% by mass or more and 70% by mass or less, based on the total amount of the fluorinated solvent (C).

The content of the compound represented by the formula (C1) may preferably be 50 to 99.7% by mass, more preferably 60 to 99.7% by mass, even more preferably 70 to 99.7% by mass, and particularly preferably 80 to 99.7% by mass, based on the total amount of the surface-treating agent.

The fluorinated solvent may be a hexafluoropropene trimer. The hexafluoropropene trimer may be a mixture of isomers represented by the following formulae (T-1), (T-2), and (T-3).

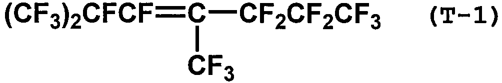

[(CF₃)₂CF]₂C=CFCF₃ (T-2)

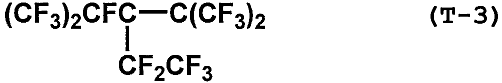

The content of the isomer represented by the formula (T-1) may preferably be 0% by mass or more and 70% by mass or less, and more preferably 1% by mass or more and 60% by mass or less, based on total 100% by mass of the hexafluoropropene trimer. The content of the isomer represented by the formula (T-2) may be preferably 5% by mass or more and 55% by mass or less, and more preferably 10% by mass or more and 45% by mass or less, based on total 100% by mass of the hexafluoropropene trimer. The content of the isomer represented by the formula (T-3) may be preferably 20% by mass or more and 80% by mass or less, and more preferably 30% by mass or more and 70% by mass or less, based on total 100% by mass of the hexafluoropropene trimer.

The boiling point of the fluorinated solvent at 1 atm (1,013 hPa) may preferably be 60°C or higher, more preferably 70°C or higher and 140°C or lower, and even more preferably 80°C or higher and 120°C or lower.

The fluorine-containing solvent (C) may further comprise a further solvent. The further solvent by being contained facilitates the handling of the composition. A layer formed using such a composition may be a continuous thin film. Moreover, such a composition may contribute to the formation of a thin film of any thickness.

The further solvent is not limited, and their examples include perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin(R) AC-6000 manufactured by Asahi Glass Co., Ltd.), and 1,1,2,2,3,3,4-heptafluorocyclopentane (such as Zeorora(R) H manufactured by Zeon Corporation)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec(TM) 7000 manufactured by Sumitomo 3M Limited), perfluorobutyl methyl ether (C₄F₉OCH₃) (such as Novec(TM) 7100 manufactured by Sumitomo 3M Limited), perfluorobutyl ethyl ether (C₄F₉OC₂H₅) (such as Novec(TM) 7200 manufactured by Sumitomo 3M Limited), and perfluorohexyl methyl ether (C₂F₅CF(OCH₃)C₃F₇) (such as Novec(TM) 7300 manufactured by Sumitomo 3M Limited), or CF₃CH₂OCF₂CHF₂ (such as Asahiklin(R) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

The boiling point (under atmospheric pressure) of the solvent may preferably be lower than 105°C, more preferably 90°C or lower, and even more preferably 80°C or lower. The solvent having a boiling point within the above range evaporates relatively easily without being heated or the like when the surface-treating agent of the present disclosure is applied to a substrate, thus making it possible to reduce the time and energy required in the surface treatment process. The lower limit of the boiling point may be, but is not limited to, for example, 30°C or higher, and preferably 50°C or higher.

The content of the further solvent may preferably be 0% by mass or more and 90% by mass or less, more preferably 0% by mass or more and 70% by mass or less, and even more preferably 0% by mass or more and 50% by mass or less, based on total 100% by mass of the fluorinated solvent (C).

The content of the fluorinated solvent (C) in the surface-treating agent may preferably be 50 to 99.7% by mass, more preferably 60 to 99.7% by mass, even more preferably 70 to 99.7% by mass, and particularly preferably 80 to 99.7% by mass.

The surface-treating agent of the present disclosure may further contain a solvent, an (unreactive) fluoropolyether compound that can be understood as a fluorine-containing oil, preferably a perfluoro(poly)ether compound (hereinafter, collectively referred to as a "fluorine-containing oil"), an (unreactive) silicone compound that can be understood as a silicone oil (hereinafter, referred to as a "silicone oil"), an alcohol, a catalyst, a surfactant, a polymerization inhibitor, a sensitizer, and the like. Note that other components are components different from the fluoropolyether group-containing silane compound (A), the low molecular weight fluorine-containing compound or low molecular weight silane coupling agent (B), and the fluorinated solvent (C).

The examples of the fluorine-containing oil include, but are not limited to, compounds (perfluoro(poly)ether compounds) represented by the following general formula (4):

Rf⁵-(OC₄F₈)_{a"}-(OC₃F₆)_{b"}-(OC₂F₄)_{c"}-(OCF₂)_{d"}-Rf⁶ (4)

wherein Rf⁵ represents a C₁₋₁₆ alkyl group optionally substituted with one or more fluorine atoms (preferably, a C₁₋₁₆ perfluoroalkyl group), Rf⁶ represents a C₁₋₁₆ alkyl group optionally substituted with one or more fluorine atoms (preferably, a C₁₋₁₆ perfluoroalkyl group), a fluorine atom, or a hydrogen atom, and Rf⁵ and Rf⁶ are more preferably, independently, a C₁₋₃ perfluoroalkyl group; and
a", b", c", and d" represent the numbers of four respective repeating units in perfluoro(poly)ether constituting the main backbone of the polymer, and are independently an integer of 0 or more and 300 or less, the sum of a", b", c", and d" is greater than 30, preferably 40 to 300, and more preferably 50 to 300. The occurrence order of the respective repeating units enclosed in parentheses provided with subscripts a", b", c", and d" is not limited in the formula. Among these repeating units, -(OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and (OCF₂CF(C₂F₅))-, and is preferably - (OCF₂CF₂CF₂CF₂)-. -(OC₃F₆)- may be any of -(OCF₂CF₂CF₂)-, -(OCF(CF₃)CF₂)-, and (OCF₂CF(CF₃))-, and is preferably -(OCF₂CF₂CF₂)-. -(OC₂F₄)- may be any of -(OCF₂CF₂)- and (OCF(CF₃))-, and is preferably -(OCF₂CF₂)-.

The examples of the perfluoro(poly)ether compound represented by the general formula (4) include compounds represented by any of the following general formulae (4a) and (4b) (one of which may be used singly, or two or more may be used as a mixture):

Rf⁵-(OCF₂CF₂CF₂)_{b"}-Rf⁶ (4a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ (4b)

wherein Rf⁵ and Rf⁶ are as described above; in the formula (4a), b" is an integer of 1 or more and 100 or less; and, in the formula (4b), a" and b" are independently an integer of 0 or more and 30 or less, c" and d" are independently an integer of 1 or more and 300 or less. The occurrence order of the respective repeating units enclosed in parentheses provided with subscripts a", b", c", and d" is not limited in the formulae.

From another viewpoint, the fluorine-containing oil may be a compound represented by the general formula Rf³-F, wherein Rf³ is a C₅₋₁₆ perfluoroalkyl group. Alternatively, the fluorine-containing oil may be a chlorotrifluoroethylene oligomer.

The fluorine-containing oil may have a number average molecular weight of preferably 1,000 or more, more preferably 1,500 or more, and even more preferably 2,000 or more. The fluorine-containing oil may have a number average molecular weight of preferably 30,000 or less, more preferably 20,000 or less, and even more preferably 10,000 or less. The molecular weight of the fluorine-containing oil may be measured using GPC.

The fluorine-containing oil may be contained in an amount of, for example, 0 to 50% by mass, preferably 0 to 30% by mass, and more preferably 0 to 5% by mass, based on the surface-treating agent. In one embodiment, the surface-treating agent of the present disclosure is substantially free of the fluorine-containing oil. Being substantially free of the fluorine-containing oil means that the fluorine-containing oil is not contained at all, or an extremely small amount of the fluorine-containing oil may be contained.

In one embodiment, the number average molecular weight of the fluorine-containing oil may be smaller than the number average molecular weight of the fluoropolyether group-containing silane compound (A). With such an average molecular weight, a cured product having high abrasion durability and high surface lubricity can be formed while suppressing deterioration of the transparency of the surface-treating layer obtained from the compound.

The fluorine-containing oil contributes to increasing the surface lubricity of the layer formed of the surface-treating agent of the present disclosure.

For example, the silicone oil may be a linear or cyclic silicone oil having 2,000 or fewer siloxane bonds. The linear silicone oil may be a so-called straight silicone oil or modified silicone oil. The examples of the straight silicone oil include dimethyl silicone oil, methyl phenyl silicone oil, and methyl hydrogen silicone oil. The examples of the modified silicone oil include those obtained by modifying the straight silicone oil with alkyl, aralkyl, polyether, higher fatty acid ester, fluoroalkyl, amino, epoxy, carboxyl, alcohol, or the like. An example of the cyclic silicone oil may be cyclic dimethylsiloxane oil.

In the surface-treating agent of the present disclosure, the silicone oil may be contained in an amount of, for example, 0 to 300 parts by mass, and preferably 50 to 200 parts by mass, based on total 100 parts by mass of the fluoropolyether group-containing silane compound (A) (in the case of using two or more silane compounds (A), the total amount of the compounds, and the same also applies below).

The silicone oil contributes to improving the surface lubricity of the surface-treating layer.

The examples of the alcohol include alcohols having 1 to 6 carbon atoms optionally substituted with one or more fluorine atoms, such as methanol, ethanol, iso-propanol, tert-butanol, CF₃CH₂OH, CF₃CF₂CH₂OH, and (CF₃)₂CHOH. Such an alcohol added to the surface-treating agent increases the stability of the surface-treating agent and improves the miscibility between the fluoropolyether group-containing silane compound (A) and the solvent.

The alcohol is contained in the surface-treating agent in an amount of preferably 0.1 to 5 times, more preferably 0.5 to 3 times, and even more preferably 0.8 to 1.2 times, in molar ratio with respect to the metal compound. With the alcohol content being within the above range, the stability of the surface-treating layer can be more increased.

The examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydrative condensation of the fluoropolyether group-containing silane compound (A), and promotes formation of a layer formed of the surface-treating agent of the present disclosure.

The examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating layer can be formed by applying the surface-treating agent to a substrate. The application of the surface-treating agent can be performed so as to coat the substrate. The coating method is not limited. For example, a wet coating method and a dry coating method can be used.

The examples of the wet coating method include dip coating, spin coating, brush coating, flow coating, spray coating, roll coating, gravure coating, and similar methods, and the wet coating method is preferably spray coating.

The examples of the dry coating method include deposition (usually, vacuum deposition), sputtering, CVD, and similar methods. The specific examples of the deposition method (usually, a vacuum deposition method) include resistive heating, high-frequency heating using electron beam, microwave, or the like, ion beam, and similar methods. The specific examples of the CVD method include plasma-CVD, optical CVD, thermal CVD, and similar methods.

Furthermore, coating by an atmospheric pressure plasma method is possible.

When using the wet coating method, the surface-treating agent of the present disclosure can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin(R) AC-6000 manufactured by Asahi Glass Co., Ltd.), and 1,1,2,2,3,3,4-heptafluorocyclopentane (such as Zeorora(R) H manufactured by Zeon Corporation)); alkyl perfluoroalkyl ethers (the perfluoroalkyl group and the alkyl group may be linear or branched) such as hydrofluoroether (HFE) (such as perfluoropropyl methyl ether (C₃F₇OCH₃) (such as Novec(TM) 7000 manufactured by Sumitomo 3M Limited), perfluorobutyl methyl ether (C₄F₉OCH₃) (such as Novec(TM) 7100 manufactured by Sumitomo 3M Limited), perfluorobutyl ethyl ether (C₄F₉OC₂H₅) (such as Novec(TM) 7200 manufactured by Sumitomo 3M Limited), and perfluorohexyl methyl ether (C₂F₅CF(OCH₃)C₃F₇) (such as Novec(TM) 7300 manufactured by Sumitomo 3M Limited), or CF₃CH₂OCF₂CHF₂ (such as Asahiklin(R) AE-3000 manufactured by Asahi Glass Co., Ltd.)). One of these solvents may be used singly, or two or more may be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists with a catalyst for hydrolysis and dehydrative condensation in the layer. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure.

The catalyst may be any suitable acid or base. The acid catalyst may be, for example, acetic acid, formic acid, or trifluoroacetic acid. The base catalyst may be, for example, ammonia or an organic amine.

The surface-treating agent after being applied may be dried as necessary. Such drying may promote the hydrolysis and dehydrative condensation of the fluoropolyether group-containing silane compound (A), which will be described below, and remove the solvent and the like.

The precursor layer may be dried at a temperature of preferably 0°C or higher and 300°C or lower, more preferably 70°C or higher and 230°C or lower, and even more preferably 120°C or higher and 180°C or lower, for a duration of preferably 0.1 hours or more and 2 hours or less, more preferably 0.15 hours or more and 1 hour or less, and even more preferably 0.3 hours or more and 0.8 hours or less.

The substrate usable in the present disclosure may be composed of any suitable material such as glass, resin (which may be natural or synthetic resin such as a commonly used plastic material), OCA (optical clear adhesive), polarizing plate metal, ceramics, semiconductors (such as silicon and germanium), electronic device, fiber (such as woven fabric and nonwoven fabric), fur, leather, wood, pottery, stone, building materials, and sanitary articles.

In a preferable embodiment, the substrate is glass, resin, a polarizing plate, OCA (optical clear adhesive), or metal, and is preferably glass, resin, a polarizing plate, or OCA (optical clear adhesive).

Glass is preferably sapphire glass, soda-lime glass, alkali aluminosilicate glass, borosilicate glass, alkali-free glass, crystal glass, or quartz glass, and is particularly preferably chemically strengthened soda-lime glass, chemically strengthened alkali aluminosilicate glass, or chemically bonded borosilicate glass.

For example, when the laminate to be produced is a kitchen utensil, the material constituting the surface of the substrate may be, for example, glass. The examples of the glass substrate used in kitchen utensils include those containing an alkaline earth metal such as Mg and Ca. The total content of alkaline earth metals in the glass substrate may preferably be 0.7 atm% or more, more preferably 0.7 atm% or more and 5 atm% or less, even more preferably 1 atm% or more and 5 atm% or less, and yet more preferably 1.5 atm% or more and 4 atm% or less.

In the glass substrate used in kitchen utensils, the O atom content is preferably 60 atm% or more and 80 atm% or less, and more preferably 65 atm% or more and 75 atm% or less. The Si atom content is preferably 20 atm% or more and 30 atm% or less, and more preferably 20 atm% or more and 25 atm% or less. The Na atom content is preferably 0.5 atm% or more and 5 atm% or less, and more preferably 1 atm% or more and 4.5 atm% or less. The Ca atom content is preferably 1 atm% or more and 3 atm% or less, and more preferably 1.2 atm% or more and 2.2 atm% or less. The Mg atom content is preferably 0.2 atm% or more and 2 atm% or less, and more preferably 0.4 atm% or more and 1.6 atm% or less. The Sn atom content is preferably 0 atm% or more and 3 atm% or less, and more preferably 0.1 atm% or more and 2.8 atm% or less.

The linear thermal expansion coefficient of the glass substrate used in kitchen utensils may preferably be 150×10⁻⁷/K or less, more preferably 100×10⁻⁷/K or less, and even more preferably 60×10⁻⁷/K or less, and may preferably be 90×10⁻⁷/K or more.

The thickness of the glass substrate used in kitchen utensils may preferably be 1 mm or more and 10 mm or less, and more preferably 1.5 mm or more and 5 mm or less.

For example, when the laminate to be produced is an optical member, the material constituting the surface of the substrate may be a material for an optical member, such as glass or a transparent plastic. Also, when the laminate to be produced is an optical member, a certain layer (or film), such as a hard coat layer or an antireflection layer, may be formed on the surface (the outermost layer) of the substrate. The antireflection layer may be any of a single-layer antireflection layer and a multi-layer antireflection layer. The examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the laminate to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and the substrate may have, for example, a plate, film, or another form. The surface region of the substrate, on which a surface-treating layer is to be formed, is at least a portion of the substrate surface, and may be suitably determined according to the use, specific configuration, and the like of the laminate to be produced.

According to the present disclosure, a laminate having good heat resistance can be provided, and in one embodiment, a laminate that has good heat resistance even after the surface-treating agent is stored for a long period of time can be preferably provided. Accordingly, the laminate of the present disclosure may be suitably used as a functional thin film.

The laminate of the present disclosure may preferably be used on various substrates such as substrates in kitchen utensils, and kitchen utensils containing such a laminate are also included within the technical scope of the present disclosure. The examples of such kitchen utensils comprise cooking appliances such as gas stoves, electric stoves, hot plates, range hoods, and refrigerators.

Moreover, the laminate of the present disclosure may also be used in an optical material. The optical material preferably comprises a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The laminate of the present disclosure may be, but is not limited to, an optical member. The examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The laminate of the present disclosure may also be medical equipment or a medical material. The laminate having a layer obtained according to the present disclosure may be an automobile interior/exterior material. The examples of the exterior material include the following: windows, light covers, and external camera covers. The examples of the interior material include the following: instrument panel covers, navigation system touch panels, and decorative interior materials.

Moreover, the laminate of the present disclosure may be an electronic device. The examples of the electronic device include portable terminal devices such as smartphones, tablets, laptop computers, and cameras; wearable devices such as smart watches; and display devices such as television, liquid crystal displays, organic EL displays, and inorganic EL displays.

So far, the laminate of the present disclosure has been described in detail. The laminate of the present disclosure, the method for producing the laminate, and the like are not limited to those exemplified above.

### Examples

The present disclosure will now be described more specifically by way of Examples below, but the present disclosure is not limited to the Examples.

Surface-treating agents (1) to (14) were prepared in the weight ratios shown in Table 1.

Fluoropolyether group-containing silane compounds (1) and (2), and low molecular weight fluorine-containing compounds or low molecular weight silane compounds (1) to (4) are as follows:
Fluoropolyether group-containing silane compound (1) 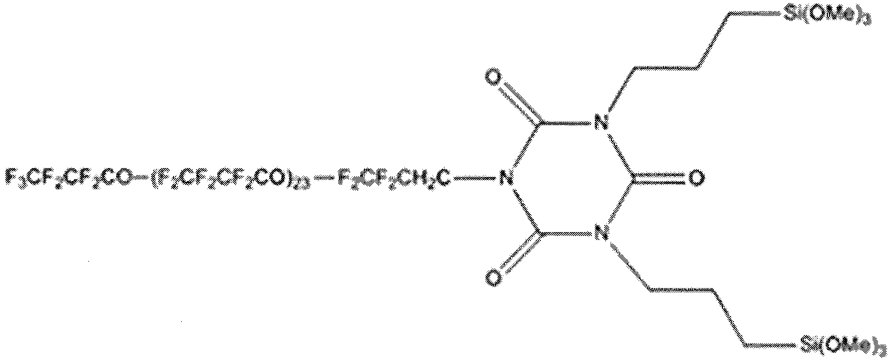
Fluoropolyether group-containing silane compound (2) 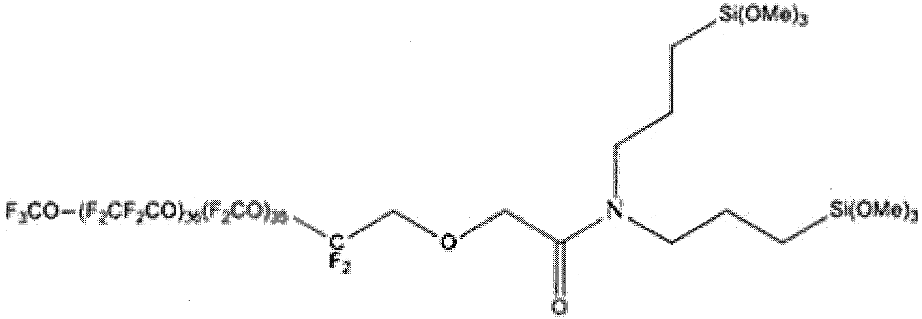
Low molecular weight fluorine-containing compound or low molecular weight silane compound (1): Ethyl nonafluorobutyl ether
Low molecular weight fluorine-containing compound or low molecular weight silane compound (2): Methyl perfluoroisobutyl ether
Low molecular weight fluorine-containing compound or low molecular weight silane compound (3): Hexafluorobenzene
Low molecular weight fluorine-containing compound or low molecular weight silane compound (4): Trimethoxyvinylsilane
Fluorinated solvent (1): Hexafluoropropene trimer ((T-1):(T-2):(T-3)=15.0:40.1:44.9 (mass ratio))

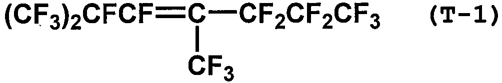

   [(CF₃)₂CF]₂C=CFCF₃ (T-2) 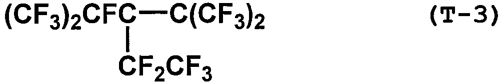
Fluorinated solvent (2): Ethyl perfluorobutyl ether

**[Table 1]**

| **Surface-treating agent** | | **1** | **2** | **3** | **4** | **5** | **6** | **7** | **8** | **9** | **10** | **11** | **12** | **13 14** | |
|---|---|---|---|---|---|---|---|---|---|---|---|---|---|---|---|
| **(A)** | **Fluoropolyether group-containing silane compound (1)** | **0.1** | **0.1** | **0.1** | **0.1** | **0.1** | **0.1** | **0.1** | **0.1** | **0.1** | **0.1** | | | **0.1** | |
| | **Fluoropolyether group-containing silane compound (2)** | | | | | | | | | | | **0.1** | **0.1** | | **0.1** |
| **(B)** | **Low molecular weight fluorine-containing compound or low molecular weight silane compound(1)** | **10.4** | **50.4** | **0.4** | **0.4** | **0.4** | **0.4** | **0.4** | **0.4** | **0.4** | **0.4** | **0.4** | **0.4** | | |
| | **Low molecular weight fluorine-containing compound or low molecular weight silane compound(2)** | | | **30** | **50** | | | | | | | | | | |
| | **Low molecular weight fluorine-containing compound or low molecular weight silane compound(3)** | | | | | **0.005** | **0.01** | **0.02** | | | | **0.01** | | | |
| | **Low molecular weight fluorine-containing compound or low molecular weight silane compound(4)** | | | | | | | | **0.005** | **0.01** | **0.02** | | **0.01** | | |
| **(C)** | **Fluorinated solvent(1)** | **90** | **50** | **70** | **50** | **100** | **100** | **100** | **100** | **100** | **100** | **100** | **100** | | |
| | **Fluorinated solvent(2)** | | | | | | | | | | | | | **100** | **100** |

A surface-treating agent was applied to a substrate according to the following procedure.

Kitchen glass was preliminary washed using an alkaline detergent to remove grease from the surface. Thereafter, the surface of the glass substrate was activated by atmospheric pressure rotating plasma (atmospheric pressure plasma conditions of 0.8 kW and 10 mm height). The surface-treating agent was applied to the glass substrate using a sprayer, and then the substrate was thermally dried at 150°C for 30 minutes (spray conditions of 40 g/m² and 30 mm height). Thereafter, the substrate was left to stand still for 2 hours to produce a glass substrate treated with a surface-treating agent.

### Method for evaluating water contact angle

First, 2 µL of water was dripped onto the treated substrate, and the water contact angle of a water droplet was measured.

### (1) Evaluation of antifouling property

A test solution was prepared by mixing 2 parts by mass of edible oil, 2 parts by mass of household soy sauce, 2 parts by mass of cooking wine, 1 part by mass of vinegar, 1 part by mass of oyster sauce, 1 part by mass of miso, 1 part by mass of edible salt, 1 part by mass of edible sodium glutamate, 1 part by mass of chicken essence, 1 part by mass of sugar, and 10 parts by mass of water. The test solution was applied in the form of a circle having R=0.5 cm to the treated substrate surface and left to stand for 2 hours, then the surface was washed with dishwashing detergent and water, and the water contact angle of the coating within the test area was measured.
A water contact angle of less than 90 degrees was regarded as being poor, 90 degrees or more and less than 100 degrees being fair, 100 degrees or more and less than 110 degrees being good, and 110 degrees or more being excellent.

### (2) High temperature resistance

The treated substrate was placed in a heating oven, treated at 250°C ±3°C for 3 hours, then removed from the oven, cooled to room temperature for 60 minutes, and rinsed with clean water, the surface was thoroughly wiped, and the water contact angle of the treated substrate was measured.
A water contact angle of less than 90 degrees was regarded as being poor, 90 degrees or more and less than 100 degrees being fair, 100 degrees or more and less than 105 degrees being good, and 105 degrees or more being excellent.

### (3) Evaluation of antifouling property of treated substrate after storage of composition for 1 month

The surface-treating agent after being prepared was stored at 25°C for 30 days and, after storage, sprayed onto the substrate according to a procedure to produce a treated substrate. Thereafter, evaluations were made in the same manner as in (1) Evaluation of antifouling property.

### (4) High temperature resistance of treated substrate after storage of composition for 1 month

The surface-treating agent after being prepared was stored at 25°C for 30 days and, after storage, sprayed onto the substrate according to a procedure to produce a treated substrate. Thereafter, evaluations were made in the same manner as in (2) High temperature resistance.

### (5) Abrasion resistance of treated substrate after storage of composition for 1 month

The surface-treating agent after being prepared was stored at 25°C for 30 days and, after storage, sprayed onto the substrate according to a procedure to produce a treated substrate. Thereafter, the abrasion resistance of the treated substrate was evaluated.

The treated substrate was abraded using a piece (1×1 cm) of 0000# steel wool at a load of 1 kg for an abrasion stroke of 6 cm at a speed of 60 revolutions/min, and the number of abrasions when the water contact angle became less than 90 degrees was used as the result of evaluating abrasion resistance.
An abrasion resistance of less than 3,000 times was regarded as being poor, an abrasion resistance of 3,000 times or more and less than 5,000 times being fair, an abrasion resistance of 5,000 times or more and less than 10,000 times being good, and an abrasion resistance of 10,000 times or more being excellent.

### (6) Alkali resistance of treated substrate after storage of composition for 1 month

The surface-treating agent after being prepared was stored at 25°C for 30 days and, after storage, sprayed onto the substrate according to a procedure to produce a treated substrate. Thereafter, the alkali resistance of the treated substrate was evaluated. The treated substrate was immersed in a 5% aqueous sodium carbonate solution for 24 hours, then removed from the solution, and rinsed with clean water, water of the surface was thoroughly wiped, and the water contact angle was measured.
A water contact angle of less than 90 degrees was regarded as being poor, 90 degrees or more and less than 100 degrees being fair, 100 degrees or more and less than 110 degrees being good, and 110 degrees or more being excellent.

### (7) Acid resistance of treated substrate after storage of composition for 1 month

The surface-treating agent after being prepared was stored at 25°C for 30 days and, after storage, sprayed onto the substrate according to a procedure to produce a treated substrate. Thereafter, the acid resistance of the treated substrate was evaluated. The treated substrate was immersed in a 5% aqueous sodium acetate solution for 24 hours, then removed from the solution, and rinsed with clean water, water of the surface was thoroughly wiped, and the water contact angle was measured.

A water contact angle of less than 90 degrees was regarded as being poor, 90 degrees or more and less than 100 degrees being fair, 100 degrees or more and less than 110 degrees being good, and 110 degrees or more being excellent.

**[Table 2]**

| | | | **Example** | | | | | | | | | | | | **Comparative Example** | |
|---|---|---|---|---|---|---|---|---|---|---|---|---|---|---|---|---|
| | | | **1** | **2** | **3** | **4** | **5** | **6** | **7** | **8** | **9** | **10** | **11** | **12** | **1** | **2** |
| | **Surface-treating agent** | | **1** | **2** | **3** | **4** | **5** | **6** | **7** | **8** | **9** | **10** | **11** | **12** | **13** | **14** |
| **(1)** | **Antifouling property of substrate treated immediately after preparation of composition** | **Antifouling property evaluation** | **○** | **○** | **○** | **○** | **⊚** | **⊚** | **⊚** | **⊚** | **⊚** | **⊚** | **⊚** | **⊚** | **○** | **○** |
| **(2)** | **Heat resistance of substrate treated immediately after preparation of composition** | **High temperature resistance** | **⊚** | **⊚** | **⊚** | **⊚** | **⊚** | **⊚** | **⊚** | **⊚** | **⊚** | **⊚** | **⊚** | **⊚** | **○** | **○** |
| **(3)** | **Antifouling property of treated substrate after storage of composition for 1 month** | **Antifouling property evaluation** | **○** | **○** | **○** | **○** | **⊚** | **⊚** | **⊚** | **⊚** | **⊚** | **⊚** | **⊚** | **⊚** | **○** | **○** |
| **(4)** | **Heat resistance of treated substrate after storage of composition for 1 month** | **High temperature resistance** | **○** | **○** | **○** | **⊚** | **○** | **○** | **⊚** | **⊚** | **⊚** | **⊚** | **○** | **⊚** | **Δ** | **Δ** |
| **(5)** | **Abrasion resistance of treated substrate after storage of composition for 1 month** | **Resistance to steel wool abrasion** | **○** | **⊚** | **⊚** | **⊚** | **⊚** | **⊚** | **⊚** | **⊚** | **⊚** | **⊚** | **⊚** | **⊚** | **×** | **×** |
| **(6)** | **Alkali resistance of treated substrate after storage of composition for 1 month** | **Treatment with 5 wt% Na₂CO₃ for 24 hours** | **○** | **○** | **○** | **○** | **⊚** | **⊚** | **⊚** | **⊚** | **⊚** | **⊚** | **⊚** | **⊚** | **×** | **×** |
| **(7)** | **Acid resistance of treated substrate after storage of composition for 1 month** | **Treatment with 5 wt% CH₃COOH for 24 hours** | **○** | **○** | **○** | **○** | **⊚** | **⊚** | **⊚** | **⊚** | **⊚** | **⊚** | **⊚** | **⊚** | **Δ** | **×** |

Concerning the surface-treating agent compositions described in Examples 1 to 12, the substrates that were surface-treated therewith have excellent antifouling properties and high temperature resistance and, in addition, the substrates treated with the surface-treating agents that were stored for a long period of time have excellent antifouling properties, high temperature resistance, abrasion resistance, alkali resistance, and acid resistance.

## Claims

1. A surface-treating agent comprising:
a fluoropolyether group-containing silane compound (A);
a low molecular weight fluorine-containing compound or low molecular weight silane compound (B); and
a fluorinated solvent (C),
wherein
the low molecular weight fluorine-containing compound or low molecular weight silane compound (B) comprises one or two or more selected from a low molecular weight fluorine-containing compound having an ether bond or an aromatic group and a low molecular weight silane coupling agent; and
the fluorinated solvent (C) comprises a compound represented by the following formula:
CR¹R²=CR³R⁴ (C1)
wherein
R¹ represents a C₁₋₆ perfluoroalkyl group or a fluorine atom,
R² represents a C₁₋₆ perfluoroalkyl group,
R³ represents a C₁₋₆ perfluoroalkyl group, and
R⁴ represents a C₁₋₆ perfluoroalkyl group.

2. The surface-treating agent according to claim 1, wherein the fluoropolyether group-containing silane compound (A) comprises at least a compound represented by the following formula (1) or (2):
R^{F1}_{α} - X^{A} - R^{Si}_{β} (1)
R^{Si}_{γ} - X^{A} - R^{F2} - X^{A} - R^{Si}_{γ} (2)
wherein
R^{F1} is independently Rf¹-R^{F}-O_{q}- or a fluoroalkyl group;
R^{F2} is -Rf²ₚ-R^{F}-O_{q}- or a fluoroalkylene group;
Rf¹ is independently a C₁₋₁₆ alkyl group optionally substituted with one or more fluorine atoms;
Rf² is a C₁₋₆ alkylene group optionally substituted with one or more fluorine atoms;
R^{F} is independently a divalent fluoropolyether group;
p is 0 or 1;
q is independently 0 or 1;
R^{Si} is independently a monovalent group containing a Si atom to which a hydroxyl group, a hydrolyzable group, a hydrogen atom, or a monovalent organic group is bonded;
at least one R^{Si} is a monovalent group containing a Si atom to which a hydroxyl group or a hydrolyzable group is bonded;
X^{A} is independently a single bond or a di- to decavalent organic group;
α is an integer of 1 to 9;
β is an integer of 1 to 9; and
γ is independently an integer of 1 to 9.

3. The surface-treating agent according to claim 1 or 2, wherein a content of the fluoropolyether group-containing silane compound (A) is 0.01% by mass or more and 5% by mass or less based on a total amount of the surface-treating agent.

4. The surface-treating agent according to any one of claims 1 to 3, wherein the low molecular weight fluorine-containing compound or low molecular weight silane compound (B) comprises one or two or more selected from the group consisting of a low molecular weight fluorine-containing compound having an ether bond (B-1), a low molecular weight fluorine-containing compound having an aromatic group (B-2), and a low molecular weight silane coupling agent (B-3).

5. The surface-treating agent according to claim 4, wherein a content of the low molecular weight fluorine-containing compound (B-1) is 2 parts by mass or more and 1,000 parts by mass or less based on 1 part by mass of the fluoropolyether group-containing silane compound (A).

6. The surface-treating agent according to claim 4 or 5, wherein a content of the low molecular weight fluorine-containing compound (B-2) is 1 part by mass or more and 50 parts by mass or less based on 100 parts by mass of the fluoropolyether group-containing silane compound (A).

7. The surface-treating agent according to any one of claims 4 to 6, wherein a content of the low molecular weight silane coupling agent (B-3) is 1 part by mass or more and 50 parts by mass or less based on 100 parts by mass of the fluoropolyether group-containing silane compound (A).

8. The surface-treating agent according to any one of claims 1 to 7, wherein the fluorinated solvent (C) has a boiling point of 100°C or higher.

9. A laminate comprising a glass substrate and a surface-treating layer, wherein
the surface-treating layer is formed from the surface-treating agent according to any one of claims 1 to 8.

10. The laminate according to claim 9, wherein the surface-treating layer has a thickness of 5 nm or more and 50 nm or less.

11. The laminate according to claim 9 or 10, wherein a content of alkaline earth metal in the glass substrate is 0.7 atm% or more.

12. A kitchen utensil comprising the laminate according to any one of claims 9 to 11.
